Europäisches Patentamt

European Patent Office

Office européen des brevets

(19)

(11) EP 1 712 935 A1

(12) **EUROPEAN PATENT APPLICATION**

(43) Date of publication:
18.10.2006 Bulletin 2006/42

(51) Int Cl.:
$G02B\ 6/02\ ^{(2006.01)}$        $G02B\ 6/024\ ^{(2006.01)}$

(21) Application number: 05007479.8

(22) Date of filing: 06.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: VRIJE UNIVERSITEIT BRUSSEL
1050 Brussel (BE)

(72) Inventors:
• Urbanczyk, Waclaw
50-305 Wroclaw (PL)
• Martynkien, Tadeusz
62-800 Kalisz (PL)
• Szpulak, Marcin
46-100 Namyslow (PL)
• Mergo, Pawel
20-258 Lubin (PL)

• Wojcik, Jan
20-530 Lubin (PL)
• Poturaj, Krzysztof
20-554 Lubin (PL)
• Thienpont, Hugo
1500 Halle (BE)
• Nasilowski, Tomasz
1040 Etterbeek (BE)

(74) Representative: Bird, Ariane et al
Bird Goën & Co
Klein Dalenstraat 42A
3020 Winksele (BE)

Remarks:
Amended claims in accordance with Rule 86 (2) EPC.

(54) **Method of fabricating micro-structured fibres**

(57)      A method is described for designing and/or producing micro-structured fibres having a predetermined polarimetric sensitivity to temperature. The method allows obtaining highly birefringent micro-structured fibres having a limited temperature sensitivity or being temperature independent for specific wavelengths. The latter is obtained by properly selection of the fibre geometry or, if the micro-structured fibre has an arbitrary geometry, by properly choosing the glass used for its manufacturing. The method comprises obtaining information about the geometry and/or about the material to be used. This information then can be used for producing micro-structured fibres. The necessary information about the geometry and/or about the construction material to be used can be obtained based on a model for the temperature sensitivity of birefringent micro-structured fibres. Furthermore, micro-structured fibres having a polarimetric sensitivity to temperature not larger than a predetermined value or even being temperature insensitive for a wide range of temperatures are described.

Fig. 1

**Description**

**Technical field of the invention**

The present invention relates to a method for designing/fabricating optical fibres and the optical fibres thus obtained. More specifically, the invention relates to a method for designing and producing micro-structured fibres and the micro-structured fibres thus obtained.

**Background of the invention**

In recent years a lot of effort has been devoted to investigate the properties of micro-structured fibres, also referred to as photonic crystal fibres, photonic bandgap fibres and holey fibres, which resulted already in many technical and scientific applications of this new class of fibres, as described by Knight in Nature 424 (2003) 847. For example, it was demonstrated that in micro-structured fibres birefringence may be induced which exceeds significantly the birefringence in standard highly birefringent fibres, i.e. $7 \times 10^{-3}$ compared to $5 \times 10^{-4}$. Birefringence is induced, both for standard and micro-structured fibres, by introducing a twofold plane symmetry in the fibre cross-section. In standard highly birefringent (HB) fibres, birefringence is induced by an elliptical shape of the core or by stress-applying elements. These fibres already found numerous applications in optical interferometric systems, fibre-optic sensors, and telecommunication devices. In the micro-structured fibres described in literature so far, birefringence is induced either by asymmetrical cladding, in which one row of hexagonal cladding cells has a lower fill factor than the other cladding cells, as described by Ortigosa-Blanch et al. in Opt. Lett. 25 (2000) 1325, or by two air holes adjacent to the fibre core and having diameters greater than the other cladding holes, as e.g. described by Suzuki et al. in Opt. Express 9 (2001) 676. It was also demonstrated by Steel et al. in J. Lightwave Technol. 19 (2001) 495, that birefringence can be induced by an elliptical shape of the cladding holes. Another way of inducing birefringence in the micro-structured fibres is to form an elliptical core, composed of two adjacent elementary cells as discussed by Hansen et al. in IEEE Photon. Tech. Lett. 13 (2001) 588, or three adjacent elementary cells, as described by Szpulak et al. in Proc. of IEEE 5th Int. Conf. On Transparent Optical Networks and European Symposium on Photonic Crystals, Poland (2002) 89, completely filled with glass.

The class of micro-structured birefringent fibres attracts much attention. Due to the higher flexibility in shaping modal birefringence, these micro-structured fibres may outperform standard HB fibres in many sensing applications. It is known, e.g. from WO 02/12931 A2 that the dispersion behaviour of micro-structured fibres can be altered by applying specific designs for the micro-structured fibres.

One of the crucial factors for deciding about the applicability of birefringent fibres to specific metrological applications is their temperature sensitivity. The response to temperature in standard HB fibres is associated mostly with residual thermal stress induced by different expansion coefficients of the glass in the fibre core and the cladding regions. As in the birefringent micro-structured fibres no doped regions are present, it may be expected that the temperature sensitivity in these fibres is significantly lower compared to the temperature sensitivity of standard HB fibres. Preliminary analysis carried out for the birefringent micro-structured fibres with asymmetric cladding and elliptical holes indeed demonstrates that temperature sensitivity in these fibres is at least one order of magnitude lower than in standard HB fibre with an elliptical core. Low temperature sensitivity of the birefringent micro-structured fibre with asymmetrical cladding at $\lambda = 1.55 \ \mu m$ was recently also confirmed experimentally.

A number of techniques are known whereby the effects of temperature changes on fibres are reduced, e.g. by providing specific packaging systems comprising members that have a specific temperature-compensating function. Such systems are e.g. described in US Patent 6,181,851 B1 or US Patent 6,771,858 B2.

Nevertheless, none of these systems describes a method for reducing the inherent temperature sensitivity of fibres, more specifically of micro-structured fibres.

**Summary of the invention**

It is an object of the present invention to provide a method for designing and/or fabricating optical fibres and the optical fibres thus obtained. More specifically, the invention relates to a method for designing and producing micro-structured fibres and the micro-structured fibres thus obtained. An advantage of the invention is the provision of optical fibres with a specific low temperature sensitivity, such as e.g. a null sensitivity if used for specific wavelengths of electromagnetic radiation, and optical fibres which have a specific temperature sensitivity, such as e.g. a null sensitivity if used for specific wavelengths of electromagnetic radiation.

The invention relates to a method for designing a micro-structured optical fibre optimised for transmitting light with a wavelength $\lambda$, said micro-structured optical fibre having a polarimetric sensitivity, said method comprising tuning said polarimetric sensitivity to temperature or an approximation thereof to have an absolute value not larger than a predetermined value over a temperature range having an upper limit of 25%, preferably 50%, more preferably 75%, even more preferably 90%, still more preferably 100% of a highest softening temperature of materials constituting said optical fibre, and a lower limit of 10˚C, preferably -40˚C, more preferably -70˚C, even more preferably -150˚C, still more preferably -270˚C, said tuning being performed by selecting a construction material having construction material parameters and by selecting a fibre design having design parameters.

Said construction parameters may comprise a refractive index $n_{const.mat.}$ and a thermal expansion coefficient $\alpha_{const.mat.}$ and said design parameters may comprise a number of cladding regions N, a refractive index $n_{clad.\ reg.}$ of a filling material filling said cladding regions, an averaged distance $\Lambda$ between the cladding regions and an average size of the i-th cladding region $d_i$.

Tuning said polarimetric sensitivity to temperature or an approximation thereof may comprise tuning the temperature induced change of the modal birefringence B combined with the product of the modal birefringence B and the thermal expansion coefficient of the construction material.

Said temperature induced change of the modal birefringence B combined with the product of the modal birefringence B and the thermal expansion coefficient of the construction material or an approximation thereof may be given by

$$
\frac{2\pi}{\lambda}\left[\begin{array}{c} \dfrac{dB(\lambda, n_{const.mat.}, n_{clad.reg.}, \Lambda, d_{cli}, N)}{dT} + \\ B(\lambda, n_{const.mat.}, n_{clad.reg.}, \Lambda, d_{cli}, N).\alpha_{const.mat.} \end{array}\right]
$$

, wherein B is the modal birefringence and dB/dT is the total differential of the modal birefringence B to temperature T.

In other words the invention may relate to a method for designing a micro-structured optical fibre optimised for transmitting light with a wavelength $\lambda$, said method comprising tuning the absolute value of the polarimetric sensitivity to temperature, given by

$$
\left|\frac{2\pi}{\lambda}\left[\begin{array}{c} \dfrac{dB(\lambda, n_{const.mat.}, n_{clad.reg.}, \Lambda, d_{cli}, N)}{dT} + \\ B(\lambda, n_{const.mat.}, n_{clad.reg.}, \Lambda, d_{cli}, N).\alpha_{const.mat.} \end{array}\right]\right|
$$

wherein B is the modal birefringence or an approximation thereof to be not larger than a predetermined value, for temperatures T over a range having an upper limit of 25%, preferably 50%, more preferably 75%, even more preferably 90%, still more preferably 100% of a highest softening temperature of materials constituting said optical fibre, and a lower limit of 10˚C, preferably -40˚C, more preferably -70˚C, even more preferably -150˚C, still more preferably -270˚C, by selecting a construction material having a refractive index $n_{const.mat.}$ and a thermal expansion coefficient $\alpha_{const.mat.}$ and a fibre design having design parameters N being a number of cladding regions, said cladding regions being filled with a filling material having a refractive index $n_{clad.\ reg.}$, $\Lambda$ being an averaged distance between the cladding regions and $d_i$ being an average size of the i-th cladding region.

The predetermined value may be smaller than 0.05 rad/(K.m), preferably smaller than 0.01 rad/(K.m), even more preferably smaller than 0.005 rad/(K.m), still more preferably 0 rad/(K.m). The predetermined value may be 0, i.e. the polarimetric sensitivity to temperature may be a null sensitivity.

Said temperature induced change of the modal birefringence B may be approximated by the sum of the rate of change of the modal birefringence with varying refractive index of the construction material multiplied with the rate of change of the refractive index of the construction material with varying temperature, the rate of change of the modal birefringence with varying refractive index of the filling material multiplied with the rate of change of the refractive index of the filling material with varying temperature and the rate of change of the modal birefringence with varying averaged distance between the cladding regions multiplied with the rate of change of the averaged distance between the cladding regions with varying temperature. In other words, said polarimetric sensitivity to temperature or an approximation thereof may be given by

$$\frac{2\pi}{\lambda}\left[\begin{array}{c}\dfrac{dB(\lambda)}{dn_{const.mat.}}\dfrac{dn_{const.mat.}}{dT}+\dfrac{dB(\lambda)}{dn_{clad.reg.}}\dfrac{dn_{clad.reg.}}{dT}\\[2mm]+\dfrac{dB}{d\Lambda/\Lambda}\dfrac{d\Lambda/\Lambda}{dT}+B(\lambda)\alpha_{const.mat.}\end{array}\right].$$

Tuning said polarimetric sensitivity to temperature or an approximation thereof may comprise selecting a specific composition of any of a glass material, a quartz glass, a fused silica, a high fused silica or a polymer material.

Tuning said polarimetric sensitivity to temperature or an approximation thereof may comprise selecting a fibre geometry.

Selecting said fibre geometry may comprise one or more of changing the number N of cladding regions, changing the average distance $\Lambda$ between said cladding regions or changing the diameter $d_{cli}$ of at least one cladding region. Changing the diameter $d_{cli}$ of at least one cladding region thereby may comprise changing the diameter of at least one pair of the cladding regions located symmetrically with respect to a centre of said fibre.

Said tuning said polarimetric sensitivity to temperature or an approximation thereof may be obtained by minimising the derivative of the modal birefringence B(X) to the refractive index $n_{const.\ mat.}$ of the construction material used.

The invention also relates to a micro-structured optical fibre for transmitting light with a wavelength $\lambda$, said micro-structured optical fibre having a fibre design with design parameters and being made of a construction material with construction material parameters, said micro-structured optical fibre having a polarimetric sensitivity or an approximation thereof with an absolute value that is tuned to be not larger than a predetermined value, for temperatures T over a range having an upper limit of 25%, preferably 50%, more preferably 75%, even more preferably 90%, still more preferably 100% of a highest softening temperature of materials constituting said optical fibre, and a lower limit of 10°C, preferably -40°C, more preferably -70°C, even more preferably -150°C, still more preferably -270°C.

Said construction material parameters may comprise a refractive index $n_{const.mat.}$ and a thermal expansion coefficient $\alpha_{const.mat.}$ and said design parameters may comprise a number of cladding regions N, a refractive index $n_{clad.\ reg.}$ of a filling material filling said cladding regions, an averaged distance $\Lambda$ between the cladding regions and an average size of the i-th cladding region $d_i$.

Said tuned polarimetric sensitivity to temperature or an approximation thereof may be a tuned value of a temperature induced change of modal birefringence B combined with a product of modal birefringence B and a thermal expansion coefficient of the construction material.

Said temperature induced change of the model birefringence B combined with the product of modal birefringence B and a thermal expansion coefficient of the construction material or an approximation thereof may be given by

$$\frac{2\pi}{\lambda}\left[\begin{array}{c}\dfrac{dB(\lambda,n_{const.mat.},n_{clad.reg.},\Lambda,d_{cli},N)}{dT}+\\[2mm]B(\lambda,n_{const.mat.},n_{clad.reg.},\Lambda,d_{cli},N).\alpha_{const.mat.}\end{array}\right],$$

wherein B is the modal birefringence and dB/dT is the differential of modal birefringence B to temperature T.

In other words, the invention also may relate to a micro-structured optical fibre for transmitting light with a wavelength $\lambda$, said micro-structured optical fibre having a design with a number N of cladding regions, $\Lambda$ being the averaged distance between the cladding regions, said cladding regions being filled with a filling material having a refractive index $n_{clad.\ reg.}$, said micro-structured optical fibre furthermore being made of a construction material having a refractive index $n_{const.\ mat.}$ and a thermal expansion coefficient $\alpha_{const.\ mat.}$, wherein the absolute value of the polarimetric sensitivity to temperature, given by

$$\left|\frac{2\pi}{\lambda}\left[\begin{array}{c}\dfrac{dB(\lambda,n_{const.mat.},n_{clad.reg.},\Lambda,d_{cli},N)}{dT}+\\[2mm]B(\lambda,n_{const.mat.},n_{clad.reg.},\Lambda,d_{cli},N).\alpha_{const.mat.}\end{array}\right]\right|$$

or an approximation thereof, is tuned to be not larger than a predetermined value, for temperatures T over a range having an upper limit of 25%, preferably 50%, more preferably 75%, even more preferably 90%, still more preferably 100% of a highest softening temperature of materials constituting said optical fibre, and a lower limit of 10˚C, preferably -40˚C, more preferably -70˚C, even more preferably -150˚C, still more preferably -270˚C, with B being the modal birefringence.

Said predetermined value may be smaller than 0.05 rad/(K.m), preferably smaller than 0.01 rad/(K.m), even more preferably smaller than 0.005 rad/(K.m), still more preferably 0 rad/(K.m). Said predetermined value may be substantially equal to 0, in other words said polarimetric sensitivity to temperature may be a null sensitivity.

Said temperature induced change of the model birefringence B may be approximated by the sum of the rate of change of the modal birefringence with varying refractive index of the construction material multiplied with the rate of change of the refractive index of the construction material with varying temperature, the rate of change of the modal birefringence with varying refractive index of the filling material multiplied with the rate of change of the refractive index of the filling material with varying temperature and the rate of change of the modal birefringence with varying averaged distance between the cladding regions multiplied with the rate of change of the averaged distance between the cladding regions with varying temperature. In other words, said polarimetric sensitivity to temperature or an approximation thereof may be given by

$$\frac{2\pi}{\lambda}\left[\frac{dB(\lambda)}{dn_{const.mat.}}\frac{dn_{const.mat.}}{dT}+\frac{dB(\lambda)}{dn_{clad.reg.}}\frac{dn_{clad.reg.}}{dT}+\frac{dB}{d\Lambda/\Lambda}\frac{d\Lambda/\Lambda}{dT}+B(\lambda)\alpha_{const.mat.}\right].$$

The invention furthermore relates to an optical sensing system comprising a micro-structured optical fibre for transmitting light with a wavelength $\lambda$, as described above. In other words, the invention furthermore may relate to an optical sensing system comprising a micro-structured optical fibre for transmitting light with a wavelength $\lambda$, said micro-structured optical fibre having a design with a number N of cladding regions, $\Lambda$ being the averaged distance between the cladding regions, said cladding regions being filled with a filling material having a refractive index $n_{clad. reg.}$, said micro-structured optical fibre furthermore being made of a construction material having a refractive index $n_{const. mat.}$ and a thermal expansion coefficient $\alpha_{const. mat.}$, wherein the absolute value of the polarimetric sensitivity to temperature, given by

$$\left|\frac{2\pi}{\lambda}\left[\frac{dB(\lambda, n_{const.mat.}, n_{clad.reg.}, \Lambda, d_{cli}, N)}{dT}+B(\lambda, n_{const.mat.}, n_{clad.reg.}, \Lambda, d_{cli}, N).\alpha_{const.mat.}\right]\right|$$

or an approximation thereof, is tuned to be not larger than a predetermined value, for temperatures T over a range having an upper limit of 25%, preferably 50%, more preferably 75%, even more preferably 90%, still more preferably 100% of a highest softening temperature of materials constituting said optical fibre, and a lower limit of 10˚C, preferably -40˚C, more preferably -70˚C, even more preferably -150˚C, still more preferably -270˚C, with B being the modal birefringence. The optical fibre may be any of the optical fibres as described above.

The invention also relates to a method for producing a micro-structured optical fibre optimised for transmitting light with a wavelength $\lambda$, said micro-structured optical fibre having a polarimetric sensitivity, being made of a construction material and having a specific design, said method comprising

- providing construction material information and design information such that said polarimetric sensitivity to temperature or an approximation thereof is tuned to have an absolute value not larger than a predetermined value over a temperature range having an upper limit of 25%, preferably 50%, more preferably 75%, even more preferably 90%, still more preferably 100% of a highest softening temperature of materials constituting said optical fibre, and a lower limit of 10˚C, preferably -40˚C, more preferably -70˚C, even more preferably -150˚C, still more preferably -270˚C, and
- producing the micro-structured optical fibre based on the provided construction material information and design information.

Said construction material information may comprise construction parameters, said construction parameters comprising a refractive index $n_{const.mat.}$ and a thermal expansion coefficient $\alpha_{const.mat.}$ and said design information may comprise design parameters, said design parameters comprising a number of cladding regions N, a refractive index $n_{clad.\ reg.}$ of a filling material filling said cladding regions, an averaged distance $\Lambda$ between the cladding regions and an average size of the i-th cladding region $d_i$.

Said tuning said polarimetric sensitivity to temperature or an approximation thereof may comprise tuning the temperature induced change of the modal birefringence B combined with the product of the modal birefringence B and the thermal expansion coefficient of the construction material.

Said temperature induced change of the model birefringence B combined with the product of the modal birefringence B and the thermal expansion coefficient of the construction material or an approximation thereof may be given by

$$\frac{2\pi}{\lambda}\left[\begin{array}{c} \dfrac{dB(\lambda, n_{const.mat.}, n_{clad.reg.}, \Lambda, d_{cli}, N)}{dT} + \\ B(\lambda, n_{const.mat.}, n_{clad.reg.}, \Lambda, d_{cli}, N).\alpha_{const.mat.} \end{array}\right],$$

wherein B is the modal birefringence and dB/dT is the total differential of the modal birefringence B to temperature T. In other words, the invention furthermore may relate to a method for producing a micro-structured optical fibre optimised for transmitting light with a wavelength $\lambda$, said micro-structured optical fibre being made of a construction material and having a specific design with a number N of cladding regions filled with filling material, said method comprising providing information about said construction material and said specific design such that the absolute value of the polarimetric sensitivity to temperature, given by

$$\left|\frac{2\pi}{\lambda}\left[\begin{array}{c} \dfrac{dB(\lambda, n_{const.mat.}, n_{clad.reg.}, \Lambda, d_{cli}, N)}{dT} + \\ B(\lambda, n_{const.mat.}, n_{clad.reg.}, \Lambda, d_{cli}, N).\alpha_{const.mat.} \end{array}\right]\right|,$$

or an approximation thereof, is tuned to be not larger than a predetermined value, for temperatures T over a range having an upper limit of 25%, preferably 50%, more preferably 75%, even more preferably 90%, still more preferably 100% of a highest softening temperature of materials constituting said optical fibre, and a lower limit of 10°C, preferably -40°C, more preferably -70°C, even more preferably -150°C, still more preferably -270°C, whereby B is the modal birefringence which is a function of $n_{const.mat.}$ and $n_{clad.reg.}$ being the refractive indices of the construction material and the filling material respectively, and of design parameters $\Lambda$ being the average distance between cladding regions, $d_{cli}$ being the average diameter of the i-th cladding region and N, being the number of cladding regions respectively, and whereby $\alpha_{const.mat}$ is a thermal expansion coefficient of the construction material, and producing the micro-structured optical fibre based on the provided construction material information and design information.

The predetermined value may be smaller than 0.05 rad/(K.m), preferably smaller than 0.01 rad/(K.m), even more preferably smaller than 0.005 rad/(K.m), still more preferably 0 rad/(K.m). The predetermined value may be 0 or in other words, the polarimetric sensitivity to temperature may be a null sensitivity.

Said temperature induced change of the model birefringence B is approximated by the sum of the rate of change of the modal birefringence with varying refractive index of the construction material multiplied with the rate of change of the referactive index of the construction material with varying temperature, the rate of change of the modal birefringence with varying refractive index of the filling material multiplied with the rate of change of the refractive index of the filling material with varying temperature and the rate of change of the modal birefringence with varying averaged distance between the cladding regions multiplied with the rate of change of the averaged distance between the cladding regions with varying temperature. In other words, said polarimetric sensitivity to temperature or an approximation thereof may be given by

$$\frac{2\pi}{\lambda}\left[\frac{dB(\lambda)}{dn_{glass}}\frac{dn_{glass}}{dT} + \frac{dB(\lambda)}{dn_{hole}}\frac{dn_{hole}}{dT} + \frac{dB}{d\Lambda/\Lambda}\frac{d\Lambda/\Lambda}{dT} + B(\lambda)\alpha_{glass}\right].$$

Providing information about said construction material and said specific design may comprise selecting a specific composition of glass material so that polarimetric sensitivity to temperature or an approximation thereof is tuned to have an absolute value of the be not larger than the predetermined value.

Providing information about said construction material and said specific design may comprise selecting a specific geometry so that the polarimetric sensitivity to temperature or an approximation thereof is tuned to have an absolute value not larger than the predetermined value.

Selecting said fibre geometry may comprise any of changing the number of cladding regions, changing the average distance between said cladding regions or changing the diameter of at least one cladding region.

Changing the diameter of at least one cladding region may comprise changing the diameter of at least one pair of the cladding regions located symmetrically with respect to a centre of said fibre.

Providing information about said construction material and said specific design may comprise information about said construction material and said specific design such that the derivative of the modal birefringence $B(\lambda)$ to the refractive index $n_{glass}$, of the construction material used is minimised.

The invention also relates to a computer program product for executing a method for designing a micro-structured optical fibre optimised for transmitting ligh with a wavelength $\lambda$ as described above. In other words, the invention also relates to a computer program product for executing a method for designing a micro-structured optical fibre optimised for transmitting light with a wavelength $\lambda$, said method comprising tuning the absolute value of the polarimetric sensitivity to temperature, given by

$$\left| \frac{2\pi}{\lambda} \left[ \frac{dB(\lambda, n_{const.mat.}, n_{clad.reg.}, \Lambda, d_{cli}, N)}{dT} + B(\lambda, n_{const.mat.}, n_{clad.reg.}, \Lambda, d_{cli}, N).\alpha_{const.mat.} \right] \right|$$

wherein B is the modal birefringence, or an approximation thereof to be not larger than a predetermined value, for temperatures T over a range having an upper limit of 25%, preferably 50%, more preferably 75%, even more preferably 90%, still more preferably 100% of a highest softening temperature of materials constituting said optical fibre, and a lower limit of 10˚C, preferably -40˚C, more preferably -70˚C, even more preferably -150˚C, still more preferably -270˚C, by selecting a construction material having a refractive index $n_{const.mat.}$ and a thermal expansion coefficient $\overline{\alpha_{const.mat.}}$ and a fibre design having design parameters N being a number of cladding regions, said cladding regions being filled with a filling material having a refractive index $n_{clad. reg.}$, $\Lambda$ being an averaged distance between the cladding regions and $d_i$ being an average size of the i-th cladding region. The computer program product also relates to any of the other methods for designing a micro-structured optical fibre as described above.

The invention furthermore relates to a machine readable data storage device storing the computer program product as described above.

The invention also relates to transmission of the computer program product as described above, over a local or wide area telecommunications network.

It is an advantage of embodiments of the present invention that the sensitivity of micro-structured fibres can be modelled such that information about the temperature sensitivity of these fibres can be relatively easily obtained.

It is an advantage that the sign of the temperature sensitivity in the micro-structured fibres can be altered by applying specific modifications to the fibre geometry, according to embodiments of the present invention.

It is furthermore an advantage that temperature desensitization, i.e. for example obtaining a null sensitivity, can be achieved in micro-structured fibres of arbitrary construction by using for its manufacturing an appropriate glass, with thermal expansion coefficient ($\alpha$) and thermooptic coefficient ($\gamma$) satisfying a certain relation according to embodiments of the present invention.

It is an advantage of the present invention that the temperature desensitization can be achieved without substantially decreasing the birefringence of the fibres.

It is also an advantage that temperature desensitization can be achieved in micro-structured fibres made of a specific type of glass, such as e.g. silica glass, by changing the fibre geometry, according to embodiments of the present invention. In this way null sensitivity to temperature can be assured at desired wavelengths.

It is an advantage of the present invention that the absolute value of the temperature sensitivity in micro-structured fibres can be tuned over two orders of magnitude during design or production by varying the fibre structure.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the improved design and production of micro-structured fibres. These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 is a schematic illustration of the cross-sections of different birefringent micro-structured fibres, which can be modelled using a method according to embodiments of the present invention..

Fig. 2 is a schematic illustration of a method for designing a micro-structured fibre, according to the first embodiment of the present invention.

Fig. 3 is a schematic representation of the different steps to be applied for modelling the temperature dependency of the modal birefringence according to the second embodiment of the present invention.

Fig. 4a - 4c is a graphical representation of the modal birefringence for the micro-structured fibres described in Fig. 1 respectively, as a function of the refractive index of the glass used and as a function of the normalised wavelength, obtained by modelling the temperature sensitivity according to a second embodiment of the present invention.

Fig. 5a - 5c is a graphical representation of the modal birefringence for the micro-structured fibres described in Fig. 1 respectively, as a function of the refractive index of the material filling the holes and of the normalised wavelength, obtained by modelling the temperature sensitivity according to a second embodiment of the present invention.

Fig. 6a - 6c is a graphical representation of the spectral dependency of the overall susceptibility of the modal birefringence, the component thereof related to thermal expansion and the component thereof related to temperature induced changes of the refractive index of air, for the micro-structured fibres described in Fig. 1, obtained by modelling the temperature sensitivity according to a second embodiment of the present invention.

Fig. 7a - 7c is a graphical representation of the spectral dependency of the polarimetric sensitivity to temperature in silica-air micro-structured fibres described in Fig. 1, obtained by modelling the temperature sensitivity according to a second embodiment of the present invention.

Fig. 8 is a schematic representation of a system for measurements of temperature-induced phase shift between polarisation modes as used in experiments for cross-checking the theoretical results obtained by modelling according to embodiments of the present invention.

Fig. 9a and Fig. 9b are a graphical representation of the experimental and theoretical phase shift as a function of temperature, for structures 100a and 100b as described in Fig. 1.

Fig. 10 is a graphical representation of the polarimetric sensitivity to temperature for a micro-structured fibre according to structure 100b of Fig. 1 wherein the micro-structured fibre is desensitised to temperature according to different embodiments of the present invention.

Fig. 11 is a schematically representation of a computer system adapted for performing a method for designing a micro-structured fibre according to different embodiments of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

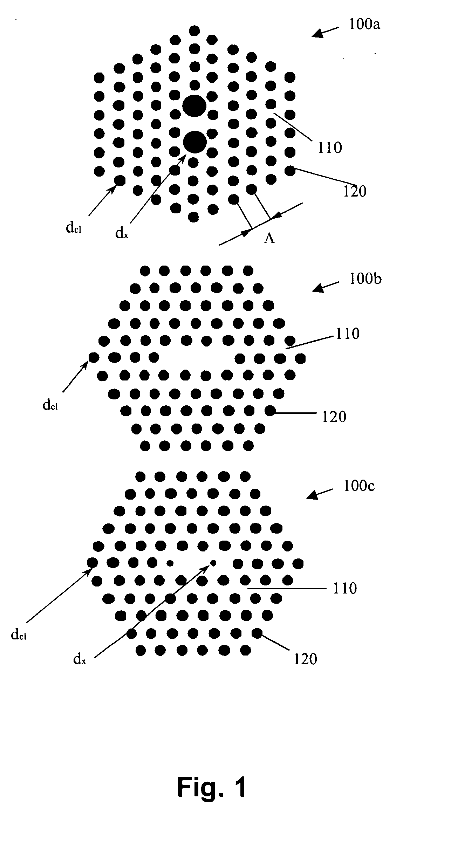

In a first embodiment, the invention relates to a method for designing a micro-structured fibre with a tuned polarimetric sensitivity to temperature. The method relates to micro-structured fibres having a periodic structure, such as e.g. photonic crystal fibres, micro-structured fibres wherein certain frequencies of light are expelled, such as e.g. photonic bandgap fibres, micro-structured fibres having hollow volumes in it, also called holey fibres, etc. The micro-structured fibres may propagate light based on index guiding. Micro-structured fibres typically are constructed by providing a fibre 100a, 100b, 100c made of a construction material 110 with a uniform composition over the entire cross-section, wherein a number N of cladding regions 120, often referred to as cladding holes, are provided. The cladding regions 120 typically are arranged cylindrical symmetrical around the central axis extending in the length direction of the fibre 100a, 100b, 100c, although the invention is not limited thereto. The construction material 110 may basically be any material that can be used to construct the desired fibre structure, such as e.g. different types of glass, quartz glass, fused silica, high fused silica or polymers. The cladding regions 120 typically are filled with a filling material having a refractive index $n_{clad.reg.}$. The filling material typically is air, although the invention is not limited thereto. Micro-structured fibres 100a, 100b, 100c have a cross-section, perpendicular to the length direction of the fibre, showing a specific micro-structure. Some - non-limiting - examples are shown in Fig. 1, showing schematic illustrations of the cross-section of three different micro-structured fibres.

The method of the present embodiment surprisingly allows tuning of the polarimetric sensitivity to temperature $K_T$ by selecting specific design parameters or specific construction materials 110. The polarimetric sensitivity to temperature $K_T$, which is wavelength $\lambda$ dependent, expresses the sensitivity of fibres to temperature T, i.e. a measure for the thermal properties of fibres, and is defined as

$$K_T = \frac{d\Delta\phi}{dT.L} \qquad\qquad [1]$$

wherein $d\Delta\phi$ is the phase shift between different polarisation modes induced by a temperature change dT, and wherein L is the length of the fibre exposed to the temperature change dT. The polarimetric sensitivity to temperature can be expressed as

$$K_T = \frac{2\pi}{\lambda}\left(\frac{dB}{dT} + B\alpha\right) \qquad\qquad [2]$$

whereby B is the modal birefringence defined by

$$B = \frac{\lambda}{2\pi}(\beta_x - \beta_y) \qquad\qquad [3]$$

wherein $\lambda$ is the wavelength of the electromagnetic radiation used, $\beta_x$ and $\beta_y$ are propagation constants for the respective modes of polarisation, and $\alpha$ is a thermal expansion coefficient of the construction material of the fibre. The first term in equation [2] represents the contribution to the overall sensitivity related only to temperature-induced changes in modal birefringence, while the second term represents the factor associated with temperature-induced fibre elongation.

The method comprises adjusting the construction material, e.g. glass, and/or the design parameters in order to obtain an optimum polarimetric sensitivity to temperature. It has been found that, for an optical fibre, an optimum polarimetric sensitivity, can be surprisingly obtained by just adjusting the construction materials and design parameters of the optical fibre. The latter can be appreciated as follows. The modal birefringence B and thus the polarimetric sensitivity to temperature is a function of the wavelength $\lambda$, the refractive index $n_{const.mat.}$ of the construction material 110, together with derived quantities thereof such as the thermo-optic coefficient $\gamma_{const.mat.}$, the thermal expansion coefficient $\alpha_{const.mat.}$ of the construction material 110 and the design parameters which comprise the average distance $\Lambda$ between cladding regions 120, the average diameter $d_{cli}$ of the i-th cladding region and the number N of cladding regions. The design parameters incorporated in the model for the polarimetric sensitivity to temperature in principle should comprise the description of the geometry of the whole cross-section or parameters allowing to describe the latter. Nevertheless, using the parameters average distance $\Lambda$ between cladding regions 120, average diameter $d_{cli}$ of the i-th cladding region and number N of cladding regions, most often allows to sufficiently accurate describe the system. The cladding regions are filled with a filling material, that typically is air, although the invention is not limited thereto, having a refractive index $n_{clad.reg.}$, and a corresponding thermo-optic coefficiency $\gamma_{clad.reg.}$. In the examples of Fig. 1, the diameter $d_{cli}$ of different cladding regions is indicated. For these examples, the diameter of most cladding regions is $d_{cl}$, while a limited number of cladding regions has a different diameter $d_x$. Other possible design parameters which may influence the birefringence B may be the position of each of the cladding regions and the shape of each of the cladding regions. If necessary, these also can be included in the model for the polarimetric sensitivity to temperature. Besides the above mentioned important construction material parameters and design parameters, other construction material parameters and design parameters may also be taken into account. Furthermore, temperature dependencies of these or other parameters or of "constants", e.g. the Young modulus, the thermal expansion coefficient, etc., can easily be taken into account by introducing their temperature dependency into the model for the polarimetric sensitivity, once the temperature dependency is known. E.g. for the thermal expansion coefficient of glasses, the dependency on temperature becomes important when the temperature approaches the softening temperature, i.e. transition temperature of the glasses. In the model, provided by way of example, this temperature dependency is not taken into account as strong temperature dependency of the thermal expansion coefficient was not an issue for the given examples in the considered temperature ranges. Nevertheless, incorporation of known temperature dependencies of constants can be easily performed, e.g. if control of the polarimetric sensitivity to temperature in a larger temperature range needs to be obtained. The modal birefringence B can e.g. be represented as a function of five parameters, not taking into account the position, the shape and the number of cladding regions, i.e. $B(\lambda/\Lambda, n_{const.mat.}, n_{clad.reg.}, \Lambda, d_{cli}/\Lambda)$, where $\lambda/\Lambda$ is a normalised light wavelength, and $d_{cli}/\Lambda$ is a filling factor of the i-th cladding hole. Equation [2] thus becomes

$$K_T = \frac{2\pi}{\lambda} \left( \frac{dB(\lambda/\Lambda, n_{cont.mat.}, n_{clad.reg.}, \Lambda, d_{cli}/\Lambda)}{dT} + B(\lambda/\Lambda, n_{const.mat.}, n_{clad.reg.}, \Lambda, d_{cli}/\Lambda)\alpha_{const.mat.} \right) \qquad [4]$$

Adjusting design and construction parameters for tuning the polarimetric sensitivity as described in equation [4] surprisingly allows for obtaining a predetermined polarimetric sensitivity. In other words, properly designing a micro-structured fibre allows to optimise the polarimetric sensitivity to temperature or designing a micro-structured fibre surprisingly allows tuning of the corresponding polarimetric sensitivity to temperature.

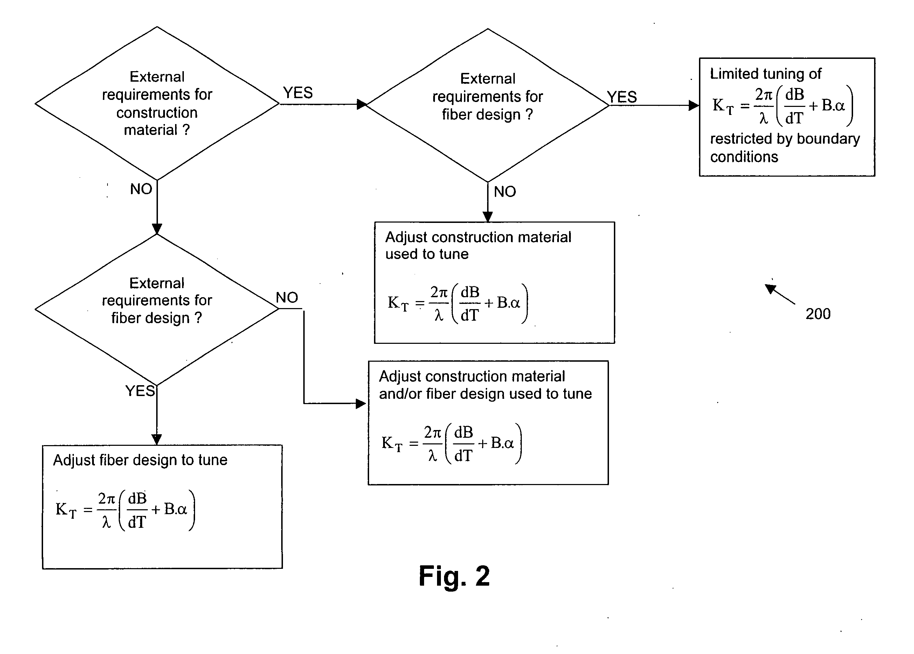

A schematic overview of the different considerations used for designing a micro-structured fibre is given in Fig. 2. Micro-structured fibres often are designed for specific purposes. A manufacturer typically uses specific design properties, or to a lesser extent the construction material properties, to optimise the fibres for their specific applications. This is often done to create a specific modal birefringence In other words, boundary conditions may already been present for the designing of the fibres. In order to further design the micro-structured fibre such that the polarimetric sensitivity to temperature is optimised, the following considerations are used.

If the boundary conditions impose specific external requirements to both the construction material parameters and the design parameters, only a limited tuning of the polarimetric sensitivity to temperature T can be performed, within the given boundary conditions. Tuning such that, e.g. a null polarimetric sensitivity to temperature can be obtained in a wide temperature range, then cannot be guaranteed. If only one of the construction material parameters or design parameters is limited by specific external requirements defined by the boundary conditions, the "unrestricted" parameters can be used for tuning the polarimetric sensitivity to temperature. In this way e.g. a null polarimetric sensitivity to temperature can be obtained in a wide temperature range. It will be clear for a person skilled in the art that with "unrestricted" parameters it is meant that the parameters are not restricted by boundary conditions based on design for specific applications. Some restrictions for all parameters will anyhow be present, based on the manufacturing process and the availability of the materials to be used. Nevertheless, the wide class of materials available and the broad range of variations in manufacturability designs allows significant freedom to actually tune the polarimetric sensitivity to temperature. With optimising the polarimetric sensitivity to temperature, very often minimising the polarimetric sensitivity to temperature is meant. It is to be noted that minimising the polarimetric sensitivity to temperature means minimising the absolute value of the polarimetric sensitivity to temperature, as the polarimetric sensitivity to temperature can be large but negative.

In a second embodiment of the present invention, optimising the polarimetric sensitivity to temperature as defined in equation [4], can surprisingly be obtained by optimising an approximation of the polarimetric sensitivity to temperature as defined in equation [5]

$$K_T(\lambda) = \frac{2\pi}{\lambda} \left[ \frac{dB(\lambda)}{dn_{consmat}} \gamma_{constmat} + \frac{dB(\lambda)}{dn_{cladreg}} \gamma_{cladreg} + \frac{dB(\lambda)}{d\Lambda/\Lambda} \alpha_{constmat} + B(\lambda) \alpha_{constmat} \right] \qquad [5]$$

The latter can be appreciated as follows. The expression of equation [5] can be obtained from equation [4] based on the following considerations. In standard HB fibres, polarimetric sensitivity to temperature is relatively high, ranging from -0.5 rad/(K.m) in elliptical core fibres up to -5 rad/(K.m) in fibres with stress applying elements. In fibres having greater temperature sensitivity, the birefringence is induced by a pair of stress-applying regions doped with $B_2O_3$ and located in the cladding near the fibre core. These regions have thermal expansion coefficient significantly greater than that of the cladding, which induces high asymmetric stress, and therefore birefringence, in the core region during the pulling process. Increasing the fibre temperature releases part of the thermal stress and in consequence diminishes its modal birefringence. As a result, the polarimetric sensitivity to temperature $K_T$ in fibres with stress applying elements is relatively high and has negative sign. In standard HB fibres with elliptical core, there are two phenomena responsible for the temperature sensitivity. The first effect is related to the change in core dimensions caused by thermal expansion and to the variation of refractive index contrast between the core and the cladding caused by the difference in thermo-optic coefficients in these two regions. The second effect is again related to thermal stress arising in the core region. Detailed analysis presented by Urbanczyk et al. in Appl. Opt. 40 (2001) 1911, shows that the second factor is a dominant one and contributes in about of 90 % to the overall temperature sensitivity. It is worth mentioning that in standard HB fibres made of silica glass, the first term in eq.(2), representing susceptibility of the modal birefringence to temperature dB/dT, is of the order of $10^{-6} \div 10^{-7}$ 1/K, while the second term $\alpha B$ representing the fibre elongation is of the order of $10^{-10}$ 1/K ($\alpha_{SiO2}=5.5\times10^{-7}$ 1/K, B=$5\times10^{-4}$) and is most often neglected when analyzing the temperature sensitivity in standard HB fibres.

The micro-structured birefringent fibres are made of a construction material 110 having uniform composition in the entire cross-section. Therefore, in the micro-structured fibres, in contrast to what occurs in standard HB fibres, there is no thermal stress induced by the difference in thermal expansion coefficient. Nevertheless, in such fibres residual thermal stress can still occur due to freezing of the pulling force, often called frozen stress, or due to gradients in the temperature distribution during glass solidification. The second type of thermal stress is equal to zero in the fibre centre and increases, e.g. parabolically, with the distance from the centre. Therefore, it can be assumed that the material birefringence induced by this type of stress in the core region is negligibly small. Furthermore, the dominant component of the frozen stress is parallel to the fibre axis, therefore, it doesn't contribute to the modal birefringence. Taking these arguments into account, stresses are totally disregarded in the analysis of thermal properties of the birefringent micro-structured fibres. In other words, in this approximation, the susceptibility of the modal birefringence to temperature dB/dT is associated only with temperature-induced changes in refractive indices $n_{const.mat.}$, $n_{clad.reg.}$, and with changes in the pitch length $\Lambda$ related to thermal expansion of the glass. Therefore, dB/dT can be expressed as:

$$\frac{dB(\lambda)}{dT} = \frac{dB}{dn_{constmat}} \frac{dn_{constmat}}{dT} + \frac{dB}{dn_{cladreg}} \frac{dn_{cladreg}}{dT} + \frac{dB}{d\Lambda/\Lambda} \frac{d\Lambda/\Lambda}{dT} \qquad [6]$$

and after simple transformations:

$$\frac{dB(\lambda)}{dT} = \frac{dB}{dn_{constmat}} \gamma_{constmat} + \frac{dB}{dn_{cladreg}} \gamma_{cladreg} + \frac{dB}{d\Lambda/\Lambda} \alpha_{constmat} \qquad [7]$$

where $\gamma_{const.mat}$ and $\gamma_{clad.reg.}$ are respectively the thermooptic coefficient of the construction material 110 and the filling material inside the cladding regions 120, while $\alpha_{const.mat}$ stands for thermal expansion coefficient of the construction material, e.g. the glass. For silica-air fibres these coefficient are equal respectively $\gamma_{SiO2} = 1 \times 10^{-5}$ 1/K, $\alpha SiO_2 = 5.5 \times 10^{-7}$ 1/K, and $\gamma_{air} = -9 \times 10^{-7}$ 1/K. However, in general case $\gamma_{const.mat.}$ can be either positive or negative depending upon construction material composition, e.g. glass composition. Substitution of equation [7] in equation [4] thus allows to obtain the approximation for the polarimetric sensitivity to temperature, given in equation [5].

Numerical analysis of B carried out for several birefringent structures shows that this function reaches maximum for certain value of refractive index ($n_{const.mat}^{max}$), which depends upon $\lambda/\Lambda$ and upon fibre geometry. Therefore, by properly selecting the construction material, e.g. glass, used to manufacture the specific birefringent micro-structured fibre, $dB/dn_{const.mat.}$ can be made to be either positive or negative. Furthermore, the absolute value of $dB/dn_{const.mat.}$ can vary in a wide range vs $n_{const.mat.}$ This feature of $dB/dn_{const.mat.}$ offers two approaches to temperature desensitization of the birefringent micro-structured fibres:

For fibres with arbitrary geometry, it is possible to find a construction material composition, e.g. glass composition, with a specific $n_{const.mat.}$, $\gamma_{const.mat.}$ and $\alpha_{const \cdot mat}$ that assures null response to temperature at desired wavelength ($K_T=0$). For glass-air fibres, the second term in equation [5] is usually much smaller that the other ones, therefore, the proper glass may be preliminarily selected using the simplified relation:

$$\frac{\gamma_{constmat}}{\alpha_{constmat}} = \frac{\dfrac{dB(\lambda)}{d\Lambda/\Lambda} + B(\lambda)}{\dfrac{dB(\lambda)}{dn_{constmat}}} . \qquad [8]$$

As modal birefringence $B(\lambda)$ and its derivative are highly dispersive, therefore, neglecting the contribution of represented in equation [5] by $dB/dn_{air}$ will result only in a small shift of wavelength at which $K_T=0$, compared to the wavelength satisfying equation [8].

For fibres made of specified material with known $n_{const.mat.}$, $\gamma_{const.mat.}$ and $\alpha_{const.mat.}$, it is possible to find a fibre geometry that assures $K_T=0$ at desired wavelength. Material used most often to manufacture a micro-structured fibre is silica glass, for which thermal expansion coefficient is very low. In such case, only the first term in eq. (6) brings significant contribution to $K_T$. Therefore, the geometry of silica-air fibre that assures null sensitivity to temperature at specific wavelength may be initially selected using the simplified relation

$$\frac{dB(\lambda)}{dn_{constmat}} = 0 \qquad [9]$$

Similarly as it was in the first case, neglecting the other terms in equation [5] causes only a small shift of wavelength at which the polarimetric sensitivity to temperature $K_T=0$, compared to the wavelength at which $B(\lambda)$ reaches maximum.

In other words, optimising the absolute value of the polarimetric sensitivity to temperature $K_T$ or an approximation thereof surprisingly can be done by just specifically selecting the construction material parameters such as the refractive index of the construction material and/or by specifically selecting design parameters such as the average distance between the cladding regions $\Lambda$, the diameter $d_{cli}$ of each of the N cladding regions the number of cladding regions or the arrangement of the cladding regions, which influences the average distance $\Lambda$. Optimising thereby typically comprises minimising the absolute value of the polarimetric sensitivity to temperature $K_T$ or an approximation thereof or tuning the polarimetric sensitivity to temperature $K_T$ or an approximation thereof such that it is not larger than a predetermined value. Tuning either the construction material parameters or the fibre design parameters allows to obtain an absolute value of the polarimetric sensitivity to temperature $K_T$ or an approximation thereof which is not larger than 0.05 rad/(K.m), preferably not larger than 0.01 rad/(K.m), even more preferably not larger than 0.005 rad/(K.m), most preferably which is 0 rad/(K.m) or in other words which has a null polarimetric sensitivity to temperature $K_T$. This limited polarimetric sensitivity to temperature $K_T$ is obtained in a wide temperature range having an upper limit of at least 95°C, preferably 200°C, more preferably 800°C, even more preferably 1100°C and a lower limit of 10°C, preferably-40°C, more preferably -70°C, even more preferably -150°C, still more preferably -270°C. The temperature range in which the polarimetric sensitivity $K_T$ to temperature needs to be limited, depends on the application and on the materials used for the fibres. Alternatively, the upper limit of this range may be defined by the temperature range wherein the fibres are applicable, i.e. for example a range having as upper limit at least 25% of the highest softening temperature, expressed in °C, of the materials constituting the fibre, preferably 50% of the highest softening temperature, more preferably 75% of the highest softening temperature, even more preferably 90% of the highest softening temperature, still more preferably the highest softening temperature. As material constants depend typically may depend on temperature, the model and calculations can be adopted to incorporate the specific temperature dependency of the material constants. The latter may e.g. be known from literature.

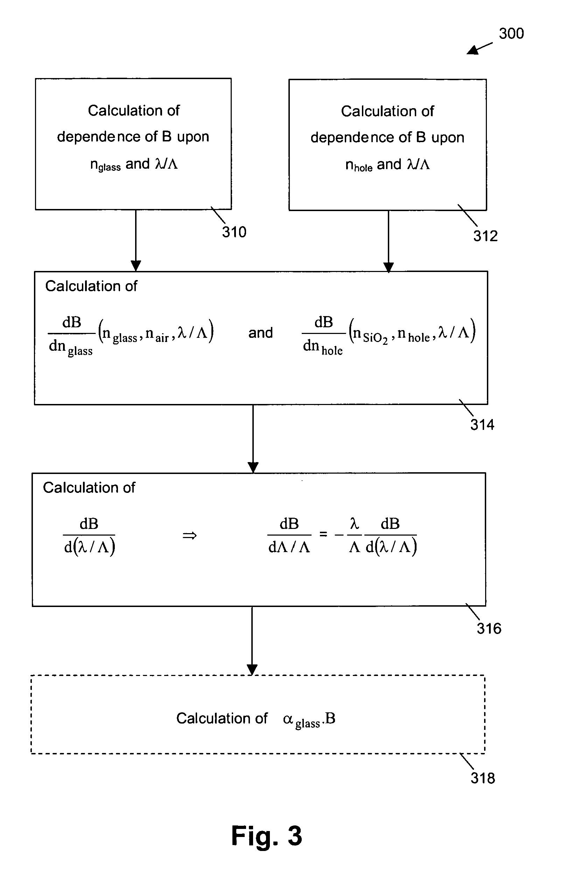

In a third embodiment of the present invention, providing information such that the temperature sensitivity can be tuned is obtained by applying a model for the polarimetric sensitivity to temperature or an approximation thereof. By way of example, the use of a model based on numerical analysis using a finite element method is described, but it will be obvious for the person skilled in the art that other types of calculation methods also may be applied, such as e.g. finite difference methods, plane wave methods, multipole methods, etc. In order to evaluate the spectral dependence of the susceptibility of the phase modal birefringence to temperature dB/dT, all terms appearing in equation [7] are determined using numerical approach, which required multiple calculations of the propagation constants $\beta_x$, $\beta_y$, and the modal birefringence B versus $\lambda/\Lambda$, $n_{const.mat.}$, and $n_{holes}$. In the present example, these calculations are performed using a fully vector based finite element method (FEM) based on edge elements, with a triangular mesh composed of about 70000 elements in one quarter of the analyzed structures. The different steps in the method 300 for modelling the polarimetric sensitivity to temperature $K_T$ are shown in Fig. 3.

In a first step 310, the dependence of B upon $n_{const.mat.}$ and $\lambda/\Lambda$ is calculated, assuming that the cladding regions are filled with air, i.e. $n_{clad.reg.}=n_{air}$, and taking into account the spectral dependence of $n_{air}$ at atmospheric pressure.

In a second step 312, the dependence of B upon $n_{clad.reg.}$, and $\lambda/\Lambda$ was numerically calculated, assuming that the fibre is made of silica glass, i.e. with $n_{const.mat.} = n_{SiO2}$ and taking into account the spectral dependence of $n_{SiO2}$.

It will be obvious for the person skilled in the art that the sequence of the first step 310 and the second step 312 is interchangeable. The calculations in these steps may e.g. be performed for wavelengths between 0.5$\mu$m and 1.5$\mu$m, i.e. 0.5<$\lambda$<1.5 $\mu$m, for a refractive index of the construction material $n_{const.mat.}$ within the range 1.25 < $n_{const.mat.}$ < 3 and for a refractive index of the filling material of the cladding regions $n_{clad.reg.}$ in the range 0.9< $n_{clad.reg.}$< 1.1, although the invention is not limited thereto. The calculation typically is performed for wavelength regions wherein the micro-structured fibre is to be used and for refractive index regions.

In the next step 314, the derivatives $dB/dn_{const.mat.}(n_{const.mat.}, n_{air}, \lambda/\Lambda)$ and $dB/dn_{clad.reg.}(n_{SiO2}, n_{clad.reg.}, \lambda/\Lambda)$ are numerically calculated based on the information obtained in the first and the second step. This numerical calculation is in the present example performed using a spline method for discrete mesh of the variable $n_{const.mat.}$ and $\lambda/\Lambda$ and the variables $n_{clad.reg.}$ and $\lambda/\Lambda$ respectively. Additionally, if comparison with micro-structured fibres being made of $SiO_2$ and with cladding regions filled with air are used, $dB/dn_{SiO2}(\lambda/\Lambda)$ and $dB/dn_{air}(\lambda/\Lambda)$ can be obtained by substituting $n_{const.mat.}=n_{SiO2}$ and $n_{clad.reg.}=n_{air}$ and interpolating discrete values of respective derivative.

In a further step 316, the term representing the effect of thermal expansion, i.e. $\Lambda dB/d\Lambda$, is determined by first differentiating of B($n_{SiO2}$, $n_{air}$, $\lambda/\Lambda$) with respect to $\lambda/\Lambda$ and then multiplying the obtained result with $-\lambda/\Lambda$. In this way $\Lambda dB/d\Lambda$ is obtained., as

$$\frac{dB}{d\Lambda/\Lambda} = -\frac{\lambda}{\Lambda}\frac{dB}{d(\lambda/\Lambda)} \qquad [10]$$

Optionally, in step 318, the term $\alpha_{const.mat.}.B$ can be calculated in order to obtain an improved approximation for the polarimetric sensitivity to temperature $K_T$. For standard high birefringence fibres, this term is often neglected because of its small contribution to the polarimetric sensitivity to temperature. For micro-structured fibres, this term also can be neglected as it only provides a limited contribution to the polarimetric sensitivity to temperature $K_T$.

By way of example, the polarimetric sensitivity to temperature $K_T$ will be illustrated for the three micro-structured fibres of different constructions shown in Fig. 1. In these examples, birefringence is induced by varying the average diameter $d_x$ of a pair of cladding regions 122 located symmetrically with respect to the central defect. It will be obvious to the person skilled in the art that these type of micro-structured fibres are only used by way of example and that other types of micro-structures, whereby the birefringence e.g. is induced by a difference in shape of the cladding or core regions, also can be optimised with methods according to the present invention. In the first structure 100a, the average diameter $d_x$ of the cladding regions 122 is significantly larger than the average diameter of the other cladding regions 120, i.e. $d_x > d_{cl}$. Such types of fibres can e.g. be obtained from Blaze Photonics Inc. In the second exemplary structure 100b, the cladding regions 122 have an average diameter $d_x=0$, or in other words the cladding regions 122 are removed. The latter means that the fibre core is composed of three elementary cells completely filled with construction material, e.g. glass. The core therefore has a highly elliptical shape. In the third exemplary structure 100c, the birefringence is induced by a pair of cladding regions 122 with an average diameter smaller than the other cladding regions 120, i.e. $d_x < d_{cl}$. The average pitch distance $\Lambda$ and the average diameter of the cladding regions ($d_{cl}$) gathered in Table 1 are chosen so that all analyzed structures operate in a single mode regime for wavelengths larger than 0.8 $\mu$m.

Table 1

|  | Structure 100a | Structure 100b | Structure 100c |
|---|---|---|---|
| $\Lambda$ [$\mu$m] | 4 | 1 | 1.5 |
| $D_{el}$ [$\mu$m] | 1.6 | 0.4 | 0.9 |
| $D_x$ [$\mu$m] | 4 | 0 | 0.45 |

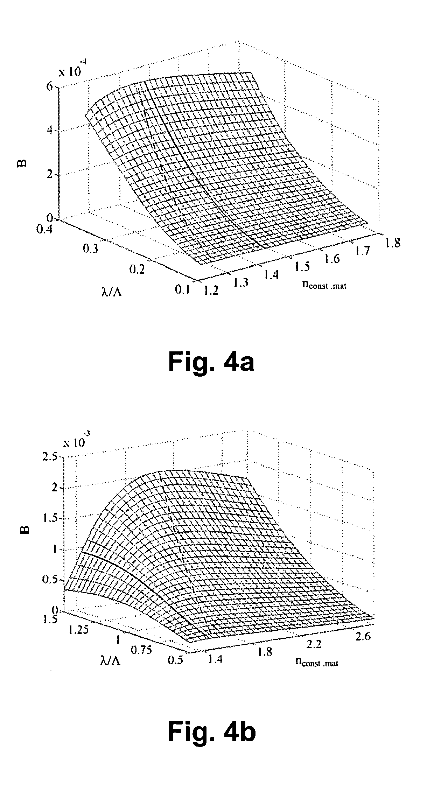

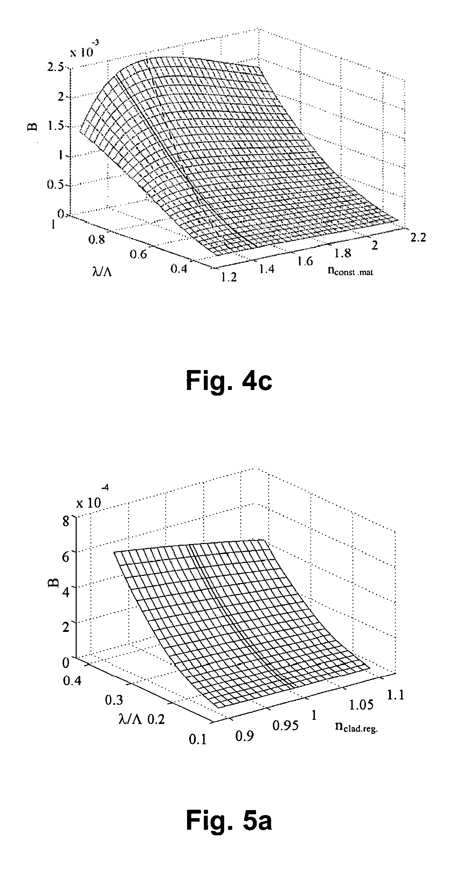

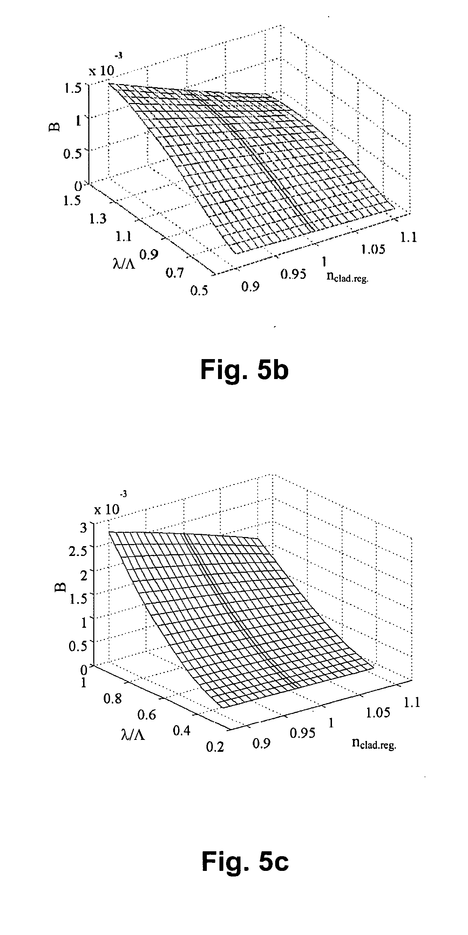

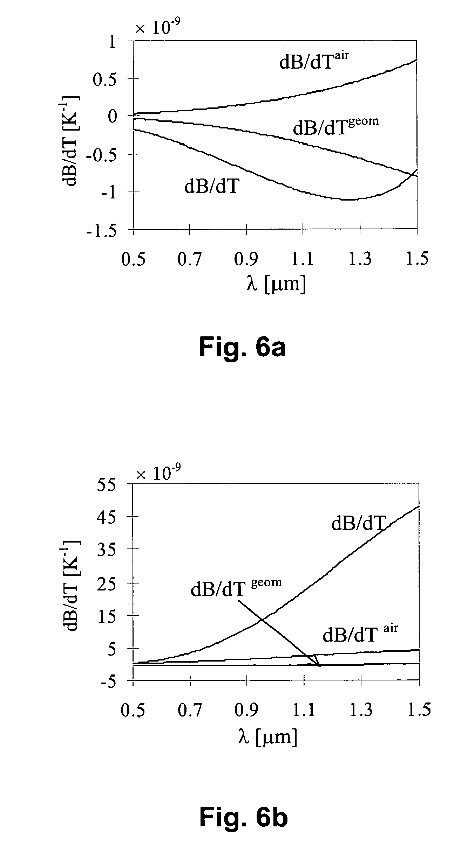

The calculated values of B($n_{const.mat.}$, $n_{air.}$, $\lambda/\Lambda$) and B($n_{SiO2}$, $n_{clad.reg.}$, $\lambda/\Lambda$), based on the model described in the third embodiment, are displayed in Fig.4a to Fig. 5c for micro-structured fibres 100a, 100b and 100c. The results clearly show that in all analyzed structures, for any normalised wavelength $\lambda/\Lambda$, the functions B($n_{const.mat.}$, $n_{air}$, $\lambda/\Lambda$) reach a maximum for certain value of the glass refractive index, indicated by $n_{const.mat.}^{max}$. The relative value of this maximum with respect to $n_{SiO2}$ depends largely upon the fibre geometry. In structure 100a, $n_{SiO2} > n_{const.mat.}^{max}$ and in consequence dB($n_{const.mat}$, $n_{air}$, $\lambda/\Lambda$)/$dn_{const.mat.}$ is negative at $n_{const.mat.}=n_{SiO2}$. Because dB/$dn_{const.mat.}$ is the main factor contributing to dB/dT, the overall susceptibility of the phase modal birefringence to temperature has negative sign in this fibre. Nevertheless, as it is shown in Fig.6a, the absolute value of dB/dT in structure 100a is very small and does not exceed 1.2x10$^{-9}$ 1/K in the analyzed spectral range. This value corresponds to a polarimetric sensitivity to temperature $K_T$= -0.006 rad/(K.m), which is about two orders of magnitude lower that in standard highly birefringent fibres with elliptical core. In structure 100b, the function B($n_{const.mat.}$, $n_{air}$, $\lambda/\Lambda$) reaches maximum for $n_{const.mat.}^{max}$ much greater than $n_{SiO2}$. Therefore, the derivative dB($n_{const.mat.}$, $n_{air}$, $\lambda/\Lambda$)/$dn_{const.mat.}$ and in consequence the overall susceptibility to temperature dB/dT are both positive in this fibre. In contrast to what is observed in structure 100a, in the birefringent micro-structured fibre with triple defect dB/dT is highly dispersive and at $\lambda$=1.5 $\mu$m reaches a level of +5x10$^{-8}$ 1/K, as shown in Fig. 6b. It corresponds to the polarimetric sensitivity to temperature $K_T$= +0.2 rad/Kxm, which is almost as high as the temperature sensitivity in standard highly birefringent fibres with elliptical core, having a polarimetric sensitivity to temperature of $K_T$= -0.5 rad/(K.m). However, it should be emphasised that due to a different mechanism of the temperature response, the sensitivities in both fibres have opposite sign.

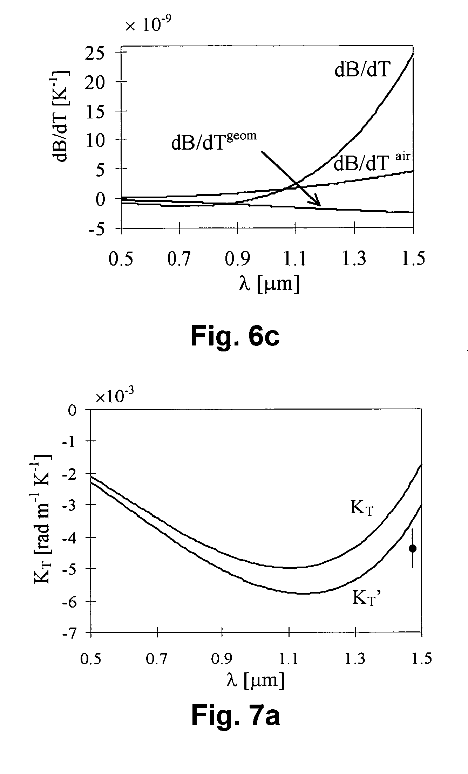

In structure 100c, the function B($n_{const.mat.}$, $n_{air}$, $\lambda/\Lambda$) arrives to maximum at $n_{const.mat.}^{max} = n_{SiO2}$ for $\lambda/\Lambda$=0.65. As a result, the overall susceptibility of the modal birefringence to temperature dB/dT changes its sign from negative to positive at $\lambda$=0.98 $\mu$m $\mu$m, while the polarimetric sensitivity to temperature $K_T$, due to the contribution related to temperature-induced fibre elongation, crosses zero at slightly different wavelength, i.e. $\lambda$=0.94 $\mu$m, as can be derived from Fig.6c. The null sensitivity wavelength can be easily tuned in structure 100c by changing the diameter ($d_x$) of the small cladding holes. A certain disadvantage of such fibre geometry is that dB/dT and $K_T$ are very dispersive and at $\lambda$=1.5 $\mu$m reach relatively high values dB/dT=+2.5$\times$10$^{-8}$ 1/K and $K_T$=+0.1 rad/Kxm, respectively.

The results shown in Fig. 6a to Fig. 6c indicate that the term dB/$dn_{const.mat.}$ in equation [7] largely depends on the fibre geometry. On the other hand, the behaviour in the terms $\gamma_{dad.reg.}$dB/$dn_{clad.eg.}$ and $\alpha_{SiO2}$ $\Lambda$ dB/d$\Lambda$ is very similar for all three exemplary structures. The term $\gamma_{clad.reg.}$dB/$dn_{clad.reg.}$, representing the effect related to temperature-induced decrease of the refractive index in air, is positive, slowly increases with wavelength, and at $\lambda$=1.5 $\mu$m reaches its maximum value for the studied range, the value ranging from +0.8$\times$10$^{-9}$ 1/K for structure 100a up to +3$\times$10$^{-9}$ 1/K for structure 100c. The term $\alpha_{SiO2}$ $\Lambda$ dB/d$\Lambda$, representing the effect of thermal expansion has a negative sign, slowly decreases with wavelength, and at $\lambda$=1.5 $\mu$m reaches its minimum value for the studied range, its value ranging from -0.6$\times$10$^{-9}$ 1/K for structure 100a up to -2$\times$10$^{-9}$ 1/K for structure 100c.

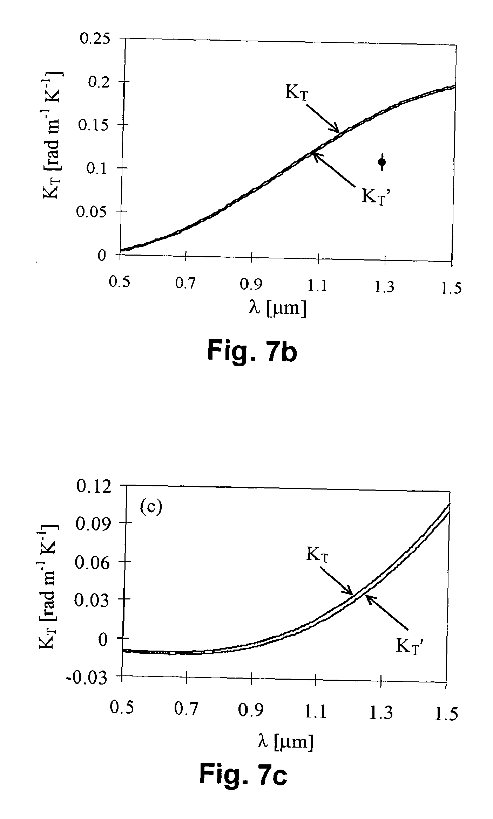

For comparison purposes, in Fig. 7a and Fig. 7b the spectral dependence of the polarimetric sensitivities to temperature $K_T$ and $K_T$' are presented, whereby the first parameter $K_T$ was calculated according to equation [7] while the second parameter $K_T$ was calculated while disregarding the term $\alpha_{SiO2}$.B, representing the effect of temperature-induced fibre elongation. The contribution to $K_T$ associated with fibre elongation is often neglected in standard HB birefringent fibres. The results presented in Fig.7a and Fig. 7b shows that also in birefringent micro-structured fibres, disregarding the temperature-induced fibre elongation leads to relatively small error of the order of 0.001 rad/Kxm. The latter is in agreement with the suggestions of method 300.

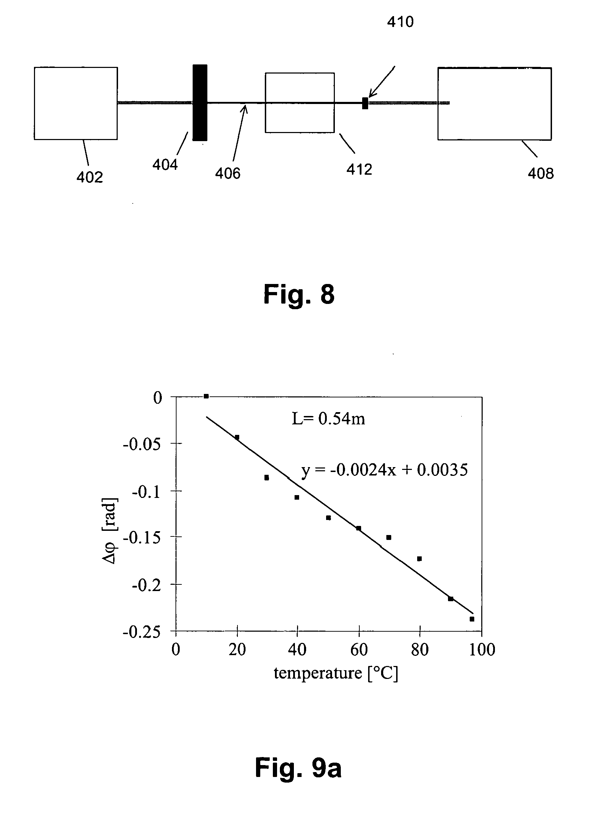

The modeling results obtained for two of the exemplary micro-structured fibres of Fig. 1 are experimentally confirmed. The polarimetric sensitivity to temperature $K_T$ has been experimentally determined for fibre structure 100a and fibre structure 100b. The experimental results were obtained for fibres of about 1.5m long, whereby the polymer coating which typically encapsulates the fibre, is removed over the complete length to avoid any stresses induced by thermal expansion of the polymer. A 0.5m long part of the fibre 100a, 100b was exposed to temperature changes in the range from 10° C to 95° C. The experimental setup 400 wherein the polarimetric sensitivity to temperature is tested is described in Fig. 8. Linearly polarised light at the fibre input was aligned at 45° to equally excite both polarization modes, e.g. by leading light of a tunable laser 402 onto a 45˚ polarizer 404, using a leading-in fibre 406. The temperature-induced changes in phase shift between the polarisation modes were measured with a resolution of about 3 degrees using a polarisation analyzer 408 (Agilent). The fibre to be studied therefore is connected to a leading-out fibre 410. The temperature for the fibre to be studied is controlled by a temperature controller 412. The sensitivity measurements were carried out at $\lambda$=1.46 $\mu$m for structure 100a. In the fibre with elliptical core, a high attenuation is observed at $\lambda$=1.46 $\mu$m due to small diameter of the cladding holes. Therefore, for structure 100b, the measurements of temperature sensitivity were carried out at $\lambda$=1.31 $\mu$m. A linear response to temperature changes for both investigated fibres was observed, as can be seen in Fig.9a and 9b. The proportionality coefficients determined for the full temperature range ($\Delta T = 85$˚C) are equal to -0.0024˚rad/K and 0.044˚rad/K respectively for structures 100a and 100b. The measurement technique allows to obtain the polarimetric sensitivity with an accuracy of 0.0002 rad/(K.m). In the present application, the above described measurement technique is used as a reference technique for experimentally determining the polarimetric sensitivity.

A special procedure was used to identify the sign of the temperature-induced phase changes. On a Poincaré diagram, an evolution of the polarisation state at the fibre output was studied while slowly changing the wavelength of the tunable lasers used as a light source. The phase shift $\Delta\varphi$ induced by changing the wavelength by $\Delta\lambda$ may be represented by the following expression:

$$\Delta\varphi = 2\pi L \frac{d}{d\lambda}\left[\frac{B(\lambda)}{\lambda}\right]\Delta\lambda \qquad [11]$$

and after some transformation:

$$\Delta\varphi = -\frac{2\pi L}{\lambda^2} G \Delta\lambda \qquad [12]$$

where G stands for group modal birefringence defined in the following way:

$$G = B - \lambda \frac{dB}{d\lambda}. \qquad [13]$$

In the chosen co-ordinate system (see Fig.1), the phase modal birefringence B has positive sign in all analysed structures. On the other hand, due to high chromatic dispersion of B represented by the second term in equation [12], the group modal birefringence G is negative. Therefore, it is concluded that increasing wavelength emitted by the light source ($\Delta\lambda$ positive) results in a increase of the phase difference between polarisation modes ($\Delta\varphi$>0). This effect was used as a reference test to recognise the direction of the temperature-induced phase changes in the investigated birefringent fibres.

In case of the fibre with a pair of large holes adjacent to the core, such as e.g. structure 100a, the phase shift induced by increasing wavelength ($\Delta\lambda$>0) had opposite sign compared to the phase shift induced by increasing temperature. Therefore, it was concluded that the sign of the polarimetric sensitivity to temperature is negative ($K_T$= - 0.0043 rad/Kxm at $\lambda$=1.46 $\mu$m), which means that increasing temperature lowers the phase modal birefringence B in this fibre. Using a similar procedure, it was found that the sign of the polarimetric sensitivity to temperature in the fibre with triple defect is positive, $K_T$= + 0.12 rad/K$\times$m at $\lambda$=1.31 $\mu$m.

For both investigated fibres, the experimental results are in relatively good agreement with the theoretical predictions. The latter is shown in Fig. 9a and Fig. 9b. The experimental results are shown by squares, whereas the modelling results are indicated by the full lines. It confirms independently that the thermal properties of the birefringent micro-structured fibres can be drastically modified by changing the fibre geometry. Furthermore, good consistency between theoretical and experimental results proves that the effect of residual thermal stresses on temperature response in the birefringent micro-structured fibres is relatively low and, therefore, its disregarding in the modelling method 300 was justified.

For comparison purposes, the sensitivity measurements for the same fibres with the polymer coating were repeated. For structure 100b having high temperature sensitivity, practically the same value of $K_T$ as for the bare fibre was obtained. For structure 100a having very low temperature sensitivity, $K_T$ measured for the fibre with polymer coating was twice as high as for the bare fibre and had opposite sign ($K_T$ = +0.011 rad/Kxm at $\lambda$=1.46 $\mu$m). This experiment

proves that the stress induced by shrinking/expansion of the polymer coating induces additional effects in temperature response of the birefringent micro-structured fibres, which may be misleading, especially in the fibres with very low $K_T$.

In a fourth embodiment, the invention relates to a method for producing a micro-structured fibre with a design as obtained in any of the previous embodiments. The method thus comprises the steps of selecting a construction material parameters and fibre design parameters whereby the polarimetric sensitivity to temperature $K_T$ is tuned according to any of the previous embodiments, but furthermore comprises using the construction material parameters and the design parameters for obtaining a construction material and a fibre design in agreement with these parameters and using these materials to produce such a micro-structured optical fibre. Construction of such micro-structured optical fibre can be performed using well known techniques such as e.g. - but not limited to - a stack- and draw method that employs capillary tubes and rods, applying additional processing steps such as heat-treatment, chemical agent treatment, stretching, pressurising or vacuum treatment, applying multiple-step drawing processes, etc.

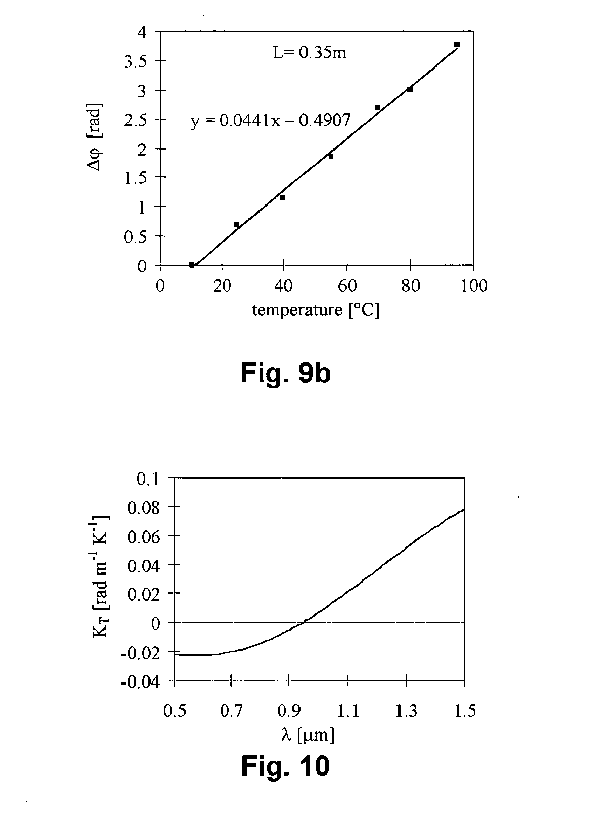

In a fifth embodiment, the invention relates to a micro-structured optical fibre, the fibre having a very low or null polarimetric sensitivity to temperature $K_T$. The micro-structured fibre typically is made of a construction material having a constant composition over the cross-section of the fibre, wherein furthermore cladding regions are provided filled with a filling material with a refractive index $n_{clad.reg.}$. The specific design, it is the average separation $\Lambda$ between the different cladding regions, the average diameter $d_{cli}$ of the different cladding regions, the shape of the different cladding regions and the number N of cladding regions, together with the specific construction material, e.g. glass, and filling material used, the latter characterised by their refractive index $n_{const.mat.}$ and $n_{clad.reg.}$ respectively and the derived properties $\gamma_{const.mat.}$ and $\gamma_{clad.reg.}$, the construction material further characterised by the thermal expansion coefficient $\alpha_{const.mat.}$ allow to tune the polarimetric sensitivity to temperature $K_T$ such that it is not larger than a predetermined value, i.e. that its absolute value is small. This predetermined value may e.g. not larger than 0.05 rad/(K.m), preferably not larger than 0.01 rad/(K.m), even more preferably not larger than 0.005 rad/(K.m) most preferably which is 0 rad/(K.m) or in other words which has a null polarimetric sensitivity to temperature $K_T$. The required degree of polarimetric sensitivity to temperature $K_T$ depends on the application for which the fibre is to be used. This limited polarimetric sensitivity to temperature $K_T$ is obtained in a wide temperature range having an upper limit of at least 95°C, preferably 200°C, more preferably 800°C, even more preferably 1100°C and a lower limit of 10°C, preferably -40°C, more preferably -70 °C, even more preferably -150°C, still more preferably -270°C. The temperature range in which the polarimetric sensitivity $K_T$ to temperature needs to be limited, depends on the application and on the materials used for the fibres. Alternatively, the upper limit of the temperature range may e.g. also be defined by the temperature range wherein the fibres are applicable, i.e. for example a range having as upper limit relative to the highest softening temperature of the materials constituting the fibre, as described in the above embodiments. The material parameters to be used can be obtained by applying a designing method according to any of embodiments 1 to 3. By way of example, a structure having a null polarimetric sensitivity to temperature based on the structure 100c is described. The null polarimetric sensitivity to temperature is obtained by a proper choice of the construction material, i.e. the glass, used for its manufacturing. For example, the glass of type Bk7 from Schott catalogue having $\gamma = 2.3 \times 10^{-6} 1/K$ and $\alpha = 7.2 \times 10^{-6} 1/K$ satisfies a null polarimetric sensitivity for temperature at $\lambda = 0.95 \mu m$. The spectral dependence of the polarimetric sensitivity to temperature $K_T$ calculated for structure 100c made of Bk7 glass is presented in Fig. 10. Comparison of the obtained results, with the results for structure 100b based on $SiO_2$ indicates that the thermal characteristics of the birefringent micro-structured fibres can be modified in a wide range by varying properties of the glass used for its manufacturing. It illustrates that for an arbitrary geometry, by selecting a proper construction material, a null sensitivity can be obtained for specific wavelengths.

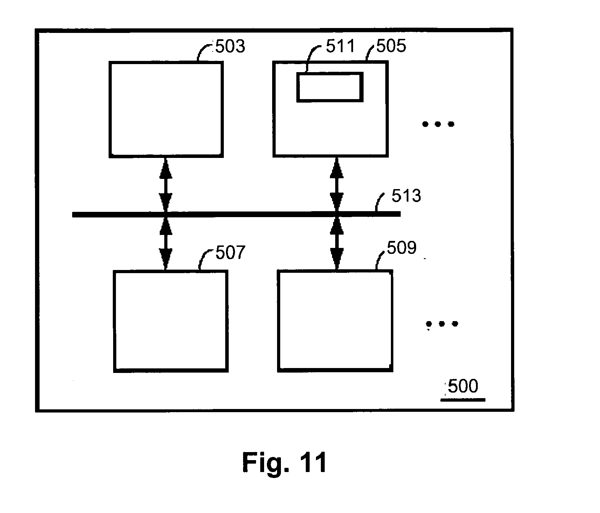

In a further embodiment, the invention also relates to a system using an optical fibre as described in the previous embodiment, thus leading to a reduced temperature sensitivity of the system. Typical systems which may take advantage of the use of such a fibre may e.g. be, but are not limited to, sensing systems, such as e.g. systems for sensing, e.g. mechanical sensing, of bending or deformation, stress, strain, pressure, electromagnetic field, pH, gasses, systems for sensing rotational or gravitational movement, in general fibre interferometers, optical fibre communication systems, etc. Further applications are in general linear and non-linear fibre optic applications, supercontinuum generation, optical fibre lasers and amplifiers. The embodiments describing methods for designing a micro-structured fibre with a tuned polarimetric sensitivity to temperature according to the present invention or the corresponding computer program products may be implemented in a processing system 500 such as shown in Fig. 11. Fig. 11 shows one configuration of processing system 500 that includes at least one programmable processor 503 coupled to a memory subsystem 505 that includes at least one form of memory, e.g. RAM, ROM, and so forth. A storage subsystem 507 may be included that has at least one disk drive and/or CD-ROM drive and/or DVD drive. In some implementations, a display system, a keyboard, and a pointing device may be included as part of a user interface subsystem 509 to provide for a user to manually input information. Ports for inputting and outputting data also may be included. More elements such as network connections, interfaces to various devices, and so forth, may be included, but are not illustrated in Fig. 11. The various elements of the processing system 500 may be coupled in various ways, including via a bus subsystem 513 shown in Fig. 11 for simplicity as a single bus, but will be understood to those in the art to include a system of at least one bus. The memory of the memory subsystem 505 may at some time hold part or all (in either case shown as 511) of a set of instructions that when executed on the processing system 500 implement the step(s) of the method embodiments described herein. Thus, while a processing system 500 such as shown in Fig. 11 is prior art, a system that includes the instructions to implement aspects of the present invention is not prior art, and therefore Fig. 11 is not labeled as

prior art.

It is to be noted that the processor 503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. Furthermore, aspects of the invention can be implemented in a computer program product tangibly embodied in a carrier medium carrying machine-readable code for execution by a programmable processor. Method steps of aspects of the invention may be performed by a programmable processor executing instructions to perform functions of those aspects of the invention, e.g. by operating on input data and generating output data. The present invention therefore also includes a computer program product which provides the functionality of the method for designing a micro-structured fibre with a tuned polarimetric sensitivity to temperature according to the present invention when executed on a computing device. Further, the present invention includes a data carrier such as a CD-ROM or a diskette which stores the computer product in a machine readable form and which executes at least one of the methods of the invention when executed on a computing device. Nowadays, such software is often offered on the Internet, hence the present invention includes transmitting the computer product according to the present invention over a local or wide area network.

It is to be understood that although preferred embodiments, specific constructions and configurations, as well as materials, have been discussed herein for devices according to the present invention, various changes or modifications in form and detail may be made without departing from the scope and spirit of this invention.

**Claims**

1.  A method for designing a micro-structured optical fibre optimised for transmitting light with a wavelength $\lambda$, said micro-structured optical fibre having a polarimetric sensitivity, said method comprising tuning said polarimetric sensitivity to temperature or an approximation thereof to have an absolute value not larger than a predetermined value over a temperature range having an upper limit of 25% of a highest softening temperature of materials constituting said optical fibre and a lower limit of 10˚C, said tuning being performed by selecting a construction material having construction material parameters and by selecting a fibre design having design parameters.

2.  A method according to claim 1, wherein said construction parameters comprise a refractive index $n_{const.mat.}$ and a thermal expansion coefficient $\alpha_{const.mat.}$ and said design parameters comprise a number of cladding regions N, a refractive index $n_{clad·reg.}$ of a filling material filling said cladding regions, an averaged distance $\Lambda$ between the cladding regions and an average size of the i-th cladding region $d_i$.

3.  A method according to claim 2, wherein tuning said polarimetric sensitivity to temperature or an approximation thereof comprises tuning a temperature induced change of a modal birefringence B combined with a product of the modal birefringence B and said thermal expansion coefficient of the construction material.

4.  A method according to claim 3, wherein said temperature induced change of the model birefringence B is approximated by a sum of a rate of change of the modal birefringence with varying refractive index of the construction material multiplied with a rate of change of the refractive index of the construction material with varying temperature, a rate of change of the modal birefringence with varying refractive index of the filling material multiplied with a rate of change of the refractive index of the filling material with varying temperature and a rate of change of the modal birefringence with varying averaged distance between the cladding regions multiplied with a rate of change of the averaged distance between the cladding regions with varying temperature.

5.  A method according to any of the previous claims wherein tuning said polarimetric sensitivity to temperature or an approximation thereof comprises selecting a specific composition of a glass material.

6.  A method according to any of the previous claims, wherein tuning said polarimetric sensitivity to temperature or an approximation thereof comprises selecting a fibre geometry.

7.  A method according to claim 6, wherein selecting said fibre geometry comprises one or more of changing the number

**17**

N of cladding regions, changing the average distance Λ between said cladding regions or changing the diameter $d_{cli}$ of at least one cladding region.

8. A method according to claim 7, wherein changing the diameter $d_{cli}$ of at least one cladding region comprises changing the diameter of at least one pair of the cladding regions located symmetrically with respect to a centre of said fibre.

9. A method according to any of the previous claims, wherein said tuning said polarimetric sensitivity to temperature or an approximation thereof is obtained by minimizing the derivative of the modal birefringence B(λ) to the refractive index $n_{const.mat.}$ of the construction material used.

10. A micro-structured optical fibre for transmitting light with a wavelength λ, said micro-structured optical fibre having a fibre design with design parameters and being made of a construction material with construction material parameters, said micro-structured optical fibre having a polarimetric sensitivity or an approximation thereof with an absolute value that is tuned to be not larger than a predetermined value, for temperatures T over a range having an upper limit of 25% of a highest softening temperature of materials constituting said optical fibre, and a lower limit of 10˚C.

11. A micro-structured optical fibre according to claim 10, wherein said construction material parameters comprise a refractive index $n_{const.mat.}$ and a thermal expansion coefficient $\alpha_{const.mat.}$ and said design parameters comprise a number of cladding regions N, a refractive index $n_{clad.reg.}$ of a filling material filling said cladding regions, an averaged distance Λ between the cladding regions and an average size of the i-th cladding region $d_i$.

12. A micro-structured optical fibre according to claim 11, wherein said tuned polarimetric sensitivity to temperature or an approximation thereof is a tuned value of a temperature induced change of modal birefringence B combined with a product of modal birefringence B and said thermal expansion coefficient of the construction material.

13. A micro-structured optical fibre according to claim 12, wherein said temperature induced change of the model birefringence B is approximated by a sum of a rate of change of the modal birefringence with varying refractive index of the construction material multiplied with a rate of change of the refractive index of the construction material with varying temperature, a rate of change of the modal birefringence with varying refractive index of the filling material multiplied with a rate of change of the refractive index of the filling material with varying temperature and a rate of change of the modal birefringence with varying averaged distance between the cladding regions multiplied with a rate of change of the averaged distance between the cladding regions with varying temperature.

14. An optical sensing system, said system comprising a micro-structured optical fibre according to any of claims 10 to 13.

15. A method for producing a micro-structured optical fibre optimised for transmitting light with a wavelength λ, said micro-structured optical fibre having a polarimetric sensitivity, being made of a construction material and having a specific design, said method comprising

- providing construction material information and design information such that said polarimetric sensitivity to temperature or an approximation thereof is tuned to have an absolute value not larger than a predetermined value over a temperature range having an upper limit of 25% of a highest softening temperature of materials constituting said optical fibre and a lower limit of 10˚C, and
- producing the micro-structured optical fibre based on the provided construction material information and design information.

16. A method according to claim 15, wherein said construction material information comprises construction parameters, said construction parameters comprising a refractive index $n_{const.mat.}$ and a thermal expansion coefficient $\alpha_{const.mat.}$ and wherein said design information comprises design parameters, said design parameters comprising a number of cladding regions N, a refractive index $n_{clad.reg.}$ of a filling material filling said cladding regions, an averaged distance Λ between the cladding regions and an average size of the i-th cladding region $d_i$.

17. A method according to claim 16, wherein tuning said polarimetric sensitivity to temperature or an approximation thereof comprises tuning the temperature induced change of the modal birefringence B combined with the product of the modal birefringence B and said thermal expansion coefficient of the construction material.

18. A method according to claim 17, wherein said temperature induced change of the model birefringence B is approximated by a sum of a rate of change of the modal birefringence with varying refractive index of the construction material multiplied with a rate of change of the refractive index of the construction material with varying temperature, a rate of change of the modal birefringence with varying refractive index of the filling material multiplied with a rate of change of the refractive index of the filling material with varying temperature and a rate of change of the modal birefringence with varying averaged distance between the cladding regions multiplied with a rate of change of the averaged distance between the cladding regions with varying temperature.

**19.** A method according to any of claims 15 to 18 wherein providing information about said construction material and said specific design comprises selecting a specific composition of glass material so that the absolute value of the polarimetric sensitivity to temperature or an approximation thereof is tuned to be not larger than the predetermined value.

**20.** A method according to any of claims 15 to 19, wherein providing information about said construction material and said specific design comprises selecting a specific geometry so that the absolute value of the polarimetric sensitivity to temperature or an approximation thereof is tuned to have an absolute value not larger than the predetermined value.

**21.** A method according to claim 20, wherein selecting said fibre geometry comprises any of changing the number of cladding regions, changing the average distance between said cladding regions or changing the diameter of at least one cladding region.

**22.** A method according to claim 21, wherein changing the diameter of at least one cladding region comprises changing the diameter of at least one pair of the cladding regions located symmetrically with respect to a centre of said fibre.

**23.** A method according to any of claims 15 to 22, wherein providing information about said construction material and said specific design comprises information about said construction material and said specific design such that the derivative of the modal birefringence $B(\lambda)$ to the refractive index $n_{glass}$ of the construction material used is minimised.

**24.** A computer program product for executing the method as claimed in any of claims 1 to 9 when executed on a network.

**25.** A machine readable data storage device storing the computer program product of claim 24.

**26.** Transmission of the computer program product of claim 24 over a local or wide area telecommunications network.

**Amended claims in accordance with Rule 86(2) EPC.**

**1.** A computer-implemented method for designing a micro-structured optical fibre (100a, 100b, 100c) optimised for transmitting light with a wavelength $\lambda$, said micro-structured optical fibre (100a, 100b, 100c) having a polarimetric sensitivity to temperature ($K_T$), said method comprising
tuning said polarimetric sensitivity to temperature ($K_T$) to have an absolute value not larger than a predetermined value over a temperature range having an upper limit of 25% of a highest softening temperature of materials constituting said optical fibre (100a, 100b, 100c) and a lower limit of 10˚C,
said tuning being performed by selecting a construction material (110) having construction material parameters and by selecting a fibre design having design parameters.

**2.** A computer-implemented method according to claim 1, wherein said construction material parameters comprise a refractive index $n_{const.mat.}$ and a thermal expansion coefficient $\alpha_{const.mat.}$ and said design parameters comprise a number N of cladding regions (120), a refractive index $n_{clad. reg.}$ of a filling material filling said cladding regions (120), an averaged distance $\Lambda$ between the cladding regions (120) and an average size of the i-th cladding region $d_i$.

**3.** A computer-implemented method according to claim 2, wherein tuning said polarimetric sensitivity to temperature ($K_T$) comprises tuning a temperature induced change of a modal birefringence B combined with a product of the modal birefringence B and said thermal expansion coefficient of the construction material (110).

**4.** A computer-implemented method according to claim 3, wherein said temperature induced change of the model birefringence B is approximated by a sum of a rate of change of the modal birefringence with varying refractive index of the construction material (110) multiplied with a rate of change of the refractive index of the construction material (110) with varying temperature, a rate of change of the modal birefringence with varying refractive index of the filling material multiplied with a rate of change of the refractive index of the filling material with varying temperature and a rate of change of the modal birefringence with varying averaged distance between the cladding regions (120) multiplied with a rate of change of the averaged distance between the cladding regions (120) with varying temperature.

**5.** A computer-implemented method according to any of the previous claims wherein tuning said polarimetric sensitivity to temperature ($K_T$) comprises selecting a specific composition of a glass material.

**6.** A computer-implemented method according to any of the previous claims, wherein tuning said polarimetric sensitivity to temperature ($K_T$) comprises selecting a fibre geometry.

**7.** A computer-implemented method according to claim 6, wherein selecting said fibre geometry comprises one or more of changing the number N of cladding regions (120), changing the average distance A between said cladding regions (120) or changing the diameter $d_{cli}$ of at least one cladding region (120).

**8.** A computer-implemented method according to claim 7, wherein changing the diameter $d_{cli}$ of at least one cladding region (120) comprises changing the diameter of at least one pair of the cladding regions (120) located symmetrically with respect to a centre of said fibre (100a, 100b, 100c).

**9.** A computer-implemented method according to any of the previous claims, wherein said tuning said polarimetric sensitivity to temperature ($K_T$) is obtained by minimizing the derivative of the modal birefringence $B(\lambda)$ to the refractive index $n_{const.\ mat.}$ of the construction material (110) used.

**10.** A computer-implemented method according to any of the previous claims, wherein said micro-structured optical fibre (100a, 100b, 100c) has a specific temperature sensitivity for said wavelength $\lambda$.

**11.** A micro-structured optical fibre (100a, 100b, 100c) for transmitting light with a wavelength $\lambda$, said micro-structured optical fibre (100a, 100b, 100c) having a fibre design with design parameters and being made of a construction material (110) with construction material parameters, said micro-structured optical fibre (100a, 100b, 100c) having a polarimetric sensitivity to temperature ($K_T$) with an absolute value that is tuned to be smaller than 0.05 rad/(K.m), for temperatures T over a range having an upper limit of 25% of a highest softening temperature of materials constituting said optical fibre, and a lower limit of 10˚C.

**12.** A micro-structured optical fibre (100a, 100b, 100c) according to claim 11, wherein said construction material parameters comprise a refractive index $n_{const.mat.}$ and a thermal expansion coefficient $\alpha_{const.mat.}$ and said design parameters comprise a number N of cladding regions (120), a refractive index $n_{clad.\ reg.}$ of a filling material filling said cladding regions (120), an averaged distance A between the cladding regions (120) and an average size of the i-th cladding region $d_i$.

**13.** A micro-structured optical fibre according to claim 12, wherein said tuned polarimetric sensitivity to temperature ($K_T$) is a tuned value of a temperature induced change of modal birefringence B combined with a product of modal birefringence B and said thermal expansion coefficient of the construction material (110).

**14.** A micro-structured optical fibre (100a, 100b, 100c) according to claim 13, wherein said temperature induced change of the model birefringence B is approximated by a sum of a rate of change of the modal birefringence with varying refractive index of the construction material (110) multiplied with a rate of change of the refractive index of the construction material (110) with varying temperature, a rate of change of the modal birefringence with varying refractive index of the filling material multiplied with a rate of change of the refractive index of the filling material with varying temperature and a rate of change of the modal birefringence with varying averaged distance between the cladding regions (120) multiplied with a rate of change of the averaged distance between the cladding regions (120) with varying temperature.

**15.** An optical sensing system, said system comprising a micro-structured optical fibre (100a, 100b, 100c) according to any of claims 11 to 14.

**16.** A method for producing a micro-structured optical fibre (100a, 100b, 100c) optimised for transmitting light with a wavelength $\lambda$, said micro-structured optical fibre having a polarimetric sensitivity to temperature ($K_T$), being made of a construction material (110) and having a specific design, said method comprising

- providing construction material information and design information such that said polarimetric sensitivity to temperature ($K_T$) is tuned to have an absolute value not larger than a predetermined value over a temperature range having an upper limit of 25% of a highest softening temperature of materials constituting said optical fibre (100a, 100b, 100c) and a lower limit of 10˚C, and

- producing the micro-structured optical fibre (100a, 100b, 100c) based on the provided construction material information and design information.

**17.** A method according to claim 16, wherein said construction material information comprises construction parameters, said construction parameters comprising a refractive index $n_{const.mat.}$ and a thermal expansion coefficient $\alpha_{const.mat.}$, and wherein said design information comprises design parameters, said design parameters comprising a number N of cladding regions (120), a refractive index $n_{clad.\ reg.}$ of a filling material filling said cladding regions (120), an averaged distance A between the cladding regions (120) and an average size of the i-th cladding region $d_i$.

**18.** A method according to claim 17, wherein tuning said polarimetric sensitivity to temperature ($K_T$) comprises tuning the temperature induced change of the modal birefringence B combined with the product of the modal birefringence B and said thermal expansion coefficient of the construction material.

**19.** A method according to claim 18, wherein said temperature induced change of the model birefringence B is approximated by a sum of a rate of change of the modal birefringence with varying refractive index of the construction material multiplied with a rate of change of the refractive index of the construction material with varying temperature, a rate of change of the modal birefringence with varying refractive index of the filling material multiplied with a rate of change of the refractive index of the filling material with varying temperature and a rate of change of the modal birefringence with varying averaged distance between the cladding regions (120) multiplied with a rate of change of the averaged distance between the cladding regions (120) with varying temperature.

**20.** A method according to any of claims 16 to 19 wherein providing information about said construction material and said specific design comprises selecting a specific composition of glass material so that the absolute value of the polarimetric sensitivity to temperature ($K_T$) is tuned to be not larger than the predetermined value.

**21.** A method according to any of claims 16 to 20, wherein providing information about said construction material and said specific design comprises selecting a specific geometry so that the absolute value of the polarimetric sensitivity to temperature ($K_T$) is tuned to have an absolute value not larger than the predetermined value.

**22.** A method according to claim 21, wherein selecting said fibre geometry comprises any of changing the number of cladding regions (120), changing the average distance between said cladding regions (120) or changing the diameter of at least one cladding region (120).

**23.** A method according to claim 22, wherein changing the diameter of at least one cladding region (120) comprises changing the diameter of at least one pair of the cladding regions (120) located symmetrically with respect to a centre of said fibre.

**24.** A method according to any of claims 16 to 23, wherein providing information about said construction material and said specific design comprises information about said construction material and said specific design such that the derivative of the modal birefringence B($\lambda$) to the refractive index $n_{glass}$ of the construction material used is minimised.

**25.** A computer program product for executing the method as claimed in any of claims 1 to 10 when executed on a network.

**26.** A machine readable data storage device storing the computer program product of claim 25.

**27.** Transmission of the computer program product of claim 25 over a local or wide area telecommunications network.

**Fig. 1**

EP 1 712 935 A1

External
requirements for
construction
material ?

YES →

External
requirements for
fiber design ?

YES →

Limited tuning of

$$K_T = \frac{2\pi}{\lambda}\left(\frac{dB}{dT} + B.\alpha\right)$$

restricted by boundary
conditions

NO ↓

NO ↓

External
requirements for
fiber design ?

NO →

Adjust construction material
used to tune

$$K_T = \frac{2\pi}{\lambda}\left(\frac{dB}{dT} + B.\alpha\right)$$

200

YES ↓

Adjust construction material
and/or fiber design used to tune

$$K_T = \frac{2\pi}{\lambda}\left(\frac{dB}{dT} + B.\alpha\right)$$

Adjust fiber design to tune

$$K_T = \frac{2\pi}{\lambda}\left(\frac{dB}{dT} + B.\alpha\right)$$

# Fig. 2

300

Calculation of
dependence of B upon
$n_{glass}$ and $\lambda/\Lambda$

310

Calculation of
dependence of B upon
$n_{hole}$ and $\lambda/\Lambda$

312

Calculation of

$$\frac{dB}{dn_{glass}}\left(n_{glass}, n_{air}, \lambda/\Lambda\right) \qquad \text{and} \qquad \frac{dB}{dn_{hole}}\left(n_{SiO_2}, n_{hole}, \lambda/\Lambda\right)$$

314

Calculation of

$$\frac{dB}{d(\lambda/\Lambda)} \qquad \Rightarrow \qquad \frac{dB}{d\Lambda/\Lambda} = -\frac{\lambda}{\Lambda}\frac{dB}{d(\lambda/\Lambda)}$$

316

Calculation of $\alpha_{glass}\cdot B$

318

## Fig. 3

**Fig. 4a**

**Fig. 4b**

**Fig. 4c**

**Fig. 5a**

Fig. 5b

Fig. 5c

**Fig. 6a**

**Fig. 6b**

**Fig. 6c**

**Fig. 7a**

**Fig. 7b**

**Fig. 7c**

## Fig. 8

L= 0.54m

y = -0.0024x + 0.0035

## Fig. 9a

**Fig. 9b**

**Fig. 10**

Fig. 11

**European Patent Office**

**EUROPEAN SEARCH REPORT**

Application Number

EP 05 00 7479

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MICHIE A; CANNING J; LYYTIKAINEN K; ASLUND M; DIGWEED J: "Temperature independent highly birefringent photonic crystal fibre" OPTICS EXPRESS, vol. 12, no. 21, 18 October 2004 (2004-10-18), pages 5160-5165, XP002332225 * abstract * * page 5161 - page 5162, line 2; figures 1,3,4 * * page 5165, paragraph 1 * ----- | 1-26 | G02B6/16 G02B6/17 |
| X | KOTYNSKI R ET AL: "Interplay of form and material birefringence in photonic crystal fibers: application for sensing" TRANSPARENT OPTICAL NETWORKS, 2004. PROCEEDINGS OF 2004 6TH INTERNATIONAL CONFERENCE ON WARSAW, POLAND JULY 4-8, 2004, PISCATAWAY, NJ, USA,IEEE, vol. 2, 4 July 2004 (2004-07-04), pages 95-98, XP010743680 ISBN: 0-7803-8343-5 * the whole document * ----- | 1-26 | |
| | | | TECHNICAL FIELDS SEARCHED (Int.Cl.7) |
| | | | G02B |

The present search report has been drawn up for all claims

| Place of search | Date of completion of the search | Examiner |
|---|---|---|
| Munich | 16 June 2005 | Elflein, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0212931 A2
- US 6181851 B1
- US 6771858 B2


**Non-patent literature cited in the description**

- **KNIGHT.** *Nature,* 2003, vol. 424, 847
- **ORTIGOSA-BLANCH et al.** *Opt. Lett.,* 2000, vol. 25, 1325
- **SUZUKI et al.** *Opt. Express,* 2001, vol. 9, 676
- **STEEL et al.** *J. Lightwave Technol.,* 2001, vol. 19, 495
- **HANSEN et al.** *IEEE Photon. Tech. Lett.,* 2001, vol. 13, 588
- **SZPULAK et al.** *Proc. of IEEE 5th Int. Conf. On Transparent Optical Networks and European Symposium on Photonic Crystals,* 2002, vol. 89
- **URBANCZYK et al.** *Appl. Opt.,* 2001, vol. 40, 1911